# EUROPEAN PATENT APPLICATION

(11) **EP 4 726 579 A1**
(43) Date of publication of application: **15.04.2026**
(21) Application number: 24858682.8
(22) Date of filing: 29.08.2024
(51) Int. Cl.: G06F 18/241

(54) **NODE CLASSIFICATION METHOD AND SYSTEM BASED ON GRAPH NEURAL NETWORK, AND RELATED DEVICE**

(30) Priority: 31.08.2023 CN 202311130100
(71) Applicant: Huawei Technologies Co., Ltd., Shenzhen, Guangdong 518129 (CN)
(72) Inventor: LIN, Fangzheng, Shenzhen, Guangdong 518129 (CN); SONG, Haonan, Shenzhen, Guangdong 518129 (CN); HU, Kangxing, Shenzhen, Guangdong 518129 (CN); WANG, Yuxian, Shenzhen, Guangdong 518129 (CN); WANG, Xiongwen, Shenzhen, Guangdong 518129 (CN); LU, Yong, Shenzhen, Guangdong 518129 (CN)
(74) Representative: Maiwald GmbH
(86) International application number: PCT/CN2024/115551
(87) International publication number: WO 2025/045151

(57) **Abstract**

A graph neural network-based node classification method and system, and a related device are provided. In the method, during training of a model, categories of a plurality of neighboring node samples in a graph data sample are first predicted to obtain category distribution of the plurality of neighboring node samples, and sampling is then performed on the plurality of neighboring node samples based on the category distribution and a sampling parameter input by a user to obtain a plurality of sampled nodes, so that category distribution of the plurality of sampled nodes is similar to or consistent with the category distribution of the plurality of neighboring node samples. In this way, features of the sampled nodes obtained through sampling can cover features of all neighboring nodes, thereby reducing calculation complexity. In addition, the category distribution of the sampled nodes is closer to true distribution of the neighboring nodes, thereby improving performance of a graph neural network.

## Description

This application claims priority to Chinese Patent Application No. 202311130100.1, filed with the China National Intellectual Property Administration on August 31, 2023 and entitled "GRAPH NEURAL NETWORK-BASED NODE CLASSIFICATION METHOD AND SYSTEM, AND RELATED DEVICE", which is incorporated herein by reference in its entirety.

### TECHNICAL FIELD

This application relates to the computer field, and in particular, to a graph neural network-based node classification method and system, and a related device.

### BACKGROUND

A graph neural network (graph neural network, GNN) is a neural network used to process graph (graph) data, and conventional neural networks can process data in a form of a vector or a matrix. The GNN is dedicated to processing graph data with a complex relationship. The graph data usually includes a plurality of nodes and edges. A node represents an individual or an entity in a graph like a user, and each node has its own feature like a user name. An edge between nodes represents a relationship between the nodes like a friend relationship, and the edge may include a weight or a label, indicating a strength or a type of the relationship. The graph neural network obtains an aggregated feature by aggregating a feature of a central node and a feature of a neighboring node, and then participates in neural network training by using the aggregated feature. A trained model can predict, based on input graph data of a to-be-detected node, a category of the to-be-detected node.

However, one central node in the graph neural network may have many neighboring nodes. If features of all the neighboring nodes and a feature of the central node are aggregated, calculation complexity is very high, prediction accuracy is low, and it is difficult to meet an application requirement.

### SUMMARY

This application provides a graph neural network-based node classification method and system, and a related device, to resolve a problem of a poor prediction effect of a graph neural network.

According to a first aspect, a node classification method is provided. The method includes the following steps: obtaining graph data and an inference sampling parameter of a to-be-detected node, where the graph data includes the to-be-detected node and a plurality of neighboring nodes connected to the to-be-detected node; inputting the graph data into a node classification model, to obtain category distribution of the plurality of neighboring nodes; performing sampling on the plurality of neighboring nodes based on the inference sampling parameter and the category distribution of the plurality of neighboring nodes, to obtain a plurality of sampled nodes; and inputting features of the plurality of sampled nodes and a feature of the to-be-detected node into the node classification model, to obtain a predicted category of the to-be-detected node.

The method described in the first aspect is implemented, the category distribution of the plurality of neighboring nodes in the graph data is first obtained through prediction, sampling is performed on the plurality of neighboring nodes by using the category distribution to obtain the plurality of sampled nodes, and the predicted category of the to-be-detected node is then predicted based on the features of the sampled nodes, thereby reducing calculation complexity. In addition, sampling distribution of the sampled nodes is obtained based on prediction results of the plurality of neighboring nodes instead of being obtained based on labels of a few labeled neighboring nodes, so that the sampled nodes can obtain features of more neighboring nodes, thereby improving prediction accuracy.

In a possible implementation, a similarity between category distribution of the plurality of sampled nodes and the category distribution of the plurality of neighboring nodes is greater than a first threshold.

In the foregoing implementation, when sampling is performed on the plurality of neighboring nodes, the sampling distribution is the same as or similar to the category distribution of the plurality of neighboring nodes. In this way, features of the sampled nodes obtained through sampling can not only cover features of all neighboring nodes, but also avoid a poor prediction effect of a model on a few categories caused by sample imbalance.

In a possible implementation, the to-be-detected node includes a labeled node and an unlabeled node, the category distribution of the plurality of neighboring nodes is obtained based on a label of the labeled node and a prediction result of the unlabeled node, and the prediction result of the unlabeled node is obtained by inputting the graph data into the node classification model.

In the foregoing implementation, the category distribution of the neighboring nodes used in this application is obtained based on labels of labeled neighboring nodes and prediction results of unlabeled neighboring nodes. In the conventional technology, features of the labeled neighboring nodes and the feature of the to-be-detected node are input into the node classification model. However, because not all neighboring nodes have labels, category distribution of the labeled neighboring nodes is different from category distribution of true neighboring nodes. In this application, the category distribution of the plurality of neighboring nodes is obtained through prediction, so that each neighboring node has a labeled category or a predicted category. Therefore, the category distribution obtained through prediction is closer to true distribution than the category distribution of the labeled neighboring nodes, and the category distribution of the sampled nodes obtained through sampling performed based on the category distribution is closer to the true distribution. Using the sampled nodes that comply with the true distribution for inference can reduce a calculation amount and improve inference efficiency. In addition, a more accurate result can be obtained, thereby improving a prediction effect.

In a possible implementation, the inference sampling parameter includes a quantity of sampled nodes, that is, a total quantity of neighboring nodes that need to be sampled. A quantity of sampled nodes of each category may be determined based on the total quantity and the category distribution of the neighboring nodes, so that the category distribution of the finally obtained sampled nodes is similar to or consistent with the category distribution of the neighboring nodes.

Optionally, the inference sampling parameter includes a quantity of sampling layers, the quantity of sampling layers is used to perform stratified sampling on the plurality of neighboring nodes based on the category distribution of the plurality of neighboring nodes to obtain the plurality of sampled nodes, where each sampling layer includes a plurality of sampled nodes of a same category, and sampled nodes of each category correspond to one or more sampling layers. During specific implementation, after the category distribution of the plurality of neighboring nodes is obtained, the plurality of neighboring nodes may be classified into a plurality of layers based on the quantity of sampling layers, where neighboring nodes at each layer are of a same category. Then, stratified sampling is performed at different sampling layers, so that the category distribution of the plurality of sampled nodes obtained through sampling is similar to or consistent with the category distribution of the plurality of neighboring nodes. Specifically, different stratified sampling methods may be used based on requirements, for example, equidistant stratified sampling and equal-proportional stratified sampling. This is not specifically limited in this application.

It should be noted that the quantity of sampling layers input by a user may be the same as or different from a quantity of categories of the neighboring nodes. In other words, neighboring nodes of a same category may be classified into one layer, or may be classified into a plurality of layers. For example, if the neighboring nodes have five categories, and the quantity of sampling layers set by the user is 10, neighboring nodes of one category are classified into two layers. This is not specifically limited in this application.

In the foregoing implementation, the user may flexibly set a sampling quantity or a sampling parameter based on a service requirement, so that the solution provided in this application can flexibly adapt to various application scenarios. In addition, a quantity of neighboring nodes of a category may be apparently less than that of another category. A category is divided into a plurality of layers, and sampling is performed at each layer, so that impact of a classification imbalance problem of neighboring nodes on model training can be reduced. Neighboring nodes from a same category are selected from a plurality of different layers, so that the sampled neighboring nodes can better represent a characteristic of the entire category, and can better cover different features and a change trend of the category. Therefore, when a model trained by using such sampled nodes processes a new unknown sample, the model can better adapt to a change of each layer, so that the trained model has a stronger generalization capability.

In a possible implementation, the inference sampling parameter includes a quantity of sampling times, the quantity of sampling times is used to perform sampling on the plurality of neighboring nodes a plurality of times, the plurality of collected nodes include a plurality of collected node sets, one collected node set corresponds to one time of sampling, the predicted category of the to-be-detected node is obtained based on a plurality of prediction results, and one prediction result is obtained by inputting one sampled node set into the node classification model.

During specific implementation, the predicted category of the to-be-detected node may be determined based on the plurality of prediction results by using a voting policy like majority voting, weighted voting, probability fusion, or a voting threshold. The majority voting refers to voting based on the prediction results, and a category with a largest quantity of votes is determined as the predicted category of the to-be-detected node. The weighted voting refers to assigning a weight to each prediction result, calculating an average value of weights to obtain a final prediction result, and determining the predicted category of the to-be-detected node based on the final prediction result. The probability fusion may be calculating an average probability or a maximum probability of a probability value corresponding to each prediction result, to obtain a fused probability, and then determining the predicted category of the to-be-detected node based on the fused probability. The voting threshold refers to setting a threshold, and when a quantity of votes of only a category with a largest quantity of votes exceeds the threshold, the category may be determined as the predicted category of the to-be-detected node. It should be understood that the foregoing examples are used for description, and the voting policy is not limited in this application.

In the foregoing implementation, sampling is performed on the plurality of neighboring nodes a plurality of times by using the quantity of sampling times input by a user, to obtain the plurality of prediction results, and then the final predicted category is obtained through voting. A same neighboring node or different neighboring nodes exist in sampled node sets obtained through sampling performed for different times. This ensures that a feature of each neighboring node can participate in model inference to a maximum extent, and improves prediction accuracy of the model.

In a possible implementation, before obtaining the graph data and the inference sampling parameter of the to-be-detected node, the method further includes the following steps: obtaining a graph data sample of a central node and a training parameter, where the graph data sample includes the central node and a plurality of neighboring node samples connected to the central node, the training sampling parameter includes a quantity of sampled nodes or a quantity of sampling layers, and the graph data of the to-be-detected node and the graph data sample of the central node are different subgraphs in a same graph; inputting the graph data sample into an initial model to obtain category distribution of the plurality of neighboring node samples; performing sampling on the plurality of neighboring node samples based on the training sampling parameter and the category distribution of the neighboring node samples, to obtain a plurality of sampled node samples, where the similarity between the category distribution of the plurality of sampled nodes and the category distribution of the plurality of neighboring nodes is greater than a second threshold; and inputting features of the plurality of sampled node samples and a feature of the central node into the initial model for training, to obtain the node classification model.

In the foregoing implementation, when the node classification model is trained, the plurality of neighboring node samples are first predicted, to obtain the category distribution of the plurality of neighboring node samples, and such category distribution is closer to true distribution. It should be understood that a quantity of labeled neighboring nodes in the graph data sample is limited, and many neighboring node samples are not labeled. Therefore, there is a specific difference between data distribution of the labeled neighboring nodes and data distribution of potential true neighboring nodes. In this application, data distribution determined based on prediction results of the neighboring node samples and labels of labeled neighboring node samples is closer to the true distribution, and the sampled node samples obtained by performing sampling on the neighboring node samples based on the data distribution can summarize features of the neighboring node samples. In addition, this feature is a feature close to a feature of the potential true distribution. Using such sampled node samples to participate in model training can not only reduce calculation complexity, but also improve model performance.

In a possible implementation, generation time of the plurality of sampled node samples is earlier than generation time of the central node.

During specific implementation, each node in the graph data sample has corresponding feature information, and the generation time may be a feature of the neighboring node sample and the central node. Definitions of the generation time are different in different scenarios. For example, in a graph data sample of a transaction network in the foregoing example, each node represents a transaction, and the generation time may be transaction time. Transaction time of a transaction corresponding to the neighboring node sample in a subgraph sample is earlier than transaction time of a transaction corresponding to the central node. For another example, in a graph data sample of a social network, each node represents a social media account, and the generation time may be creation time of the account. In this case, creation time of an account corresponding to the neighboring node sample in a subgraph sample is earlier than creation time of an account corresponding to the central node. The foregoing examples are used for description. This is not specifically limited in this application.

In the foregoing implementation, when the node classification model is trained, the generation time of the sampled node samples participating in training is earlier than the generation time of the to-be-detected node. Because a future neighboring node cannot participate in inference in an actual inference process, in a model training process, neighboring node samples whose generation time is earlier than that of the central node are also used to participate in model training, so that the plurality of neighboring node samples in a subgraph sample can better comply with true distribution, and performing model training based on the subgraph sample can improve accuracy of a trained model in an inference phase.

In a possible implementation, feature vectors of the sampled node samples and a feature vector of the central node may be first obtained, next, feature aggregation of the plurality of sampled node samples and the central node is implemented by using an aggregate function, to obtain an aggregated feature of the central node, and then the initial model is trained based on the aggregated feature until the model converges, to obtain a trained first model.

Specifically, when the initial model is trained based on the aggregated feature, the aggregated feature may be first input into the initial model to obtain an output result, a loss value (loss) is obtained based on a difference between the output result and a label of the central node, a model parameter of the initial model is adjusted based on the loss to obtain an updated initial model, a graph data sample of a new central node is then input into the updated initial model to generate a new subgraph sample, sampling is performed on the new subgraph sample to obtain new sampled nodes, features of the new sampled nodes and a feature of the new central node are aggregated to obtain a new aggregated feature, the new aggregated feature is input into the updated initial model to obtain a new output result, a loss is obtained based on a difference between the new output result and a label of the new central node, and a model parameter of the updated initial model is adjusted again based on the loss to obtain a re-updated initial model. By analogy, a plurality of rounds of training is performed until the model converges, to obtain the first model.

For example, it is assumed that the central node includes 100 neighboring nodes, and there are 61 true nodes of a category A and 39 nodes of a category B in the 100 neighboring nodes, that is, a potential true distribution proportion is 61:39. However, there are actually only 10 labeled neighboring nodes, and the remaining 90 nodes are unlabeled neighboring nodes, where five labeled neighboring nodes are of the category A, and five labeled neighboring nodes are of the category B. Therefore, category distribution obtained based on the labeled neighboring nodes is 1:1, which is greatly different from the potential true distribution proportion 61:39. If sampling is performed based on the category distribution of the labeled neighboring nodes, a large difference between the sampled data distribution and the true distribution is caused, leading to a poor model training effect.

According to the node classification method provided in this application, the 90 unlabeled neighboring nodes are first predicted by using the initial model. It is assumed that 60 unlabeled neighboring nodes are predicted to be of the category A, and 30 unlabeled neighboring nodes are predicted to be of the category B. In this case, it may be determined, based on prediction results of the unlabeled neighboring nodes and labels of the labeled neighboring nodes, that category distribution of the 100 neighboring nodes in a first round is 65:35=13:7. If there are 20 sampled nodes, there are 13 sampled nodes of the category A and 7 sampled nodes of the category B. It should be understood that, compared with the category distribution 1:1 obtained based on the labeled neighboring nodes, the category distribution 13:7 obtained based on the prediction results of the unlabeled neighboring nodes and the labels of the labeled neighboring nodes is closer to the potential true distribution 61:39. If sampling is performed based on the category distribution obtained based on the prediction results of the unlabeled nodes and the labels of the labeled nodes, sampled nodes that more comply with the true distribution can be obtained, and model performance can be improved by performing model training based on the sampled nodes.

Further, a first round of training is performed on the model by using the 20 sampled nodes that comply with the potential true distribution, to obtain a trained first model. A prediction capability of the first model is better than that of the initial model used in the first round. When categories of the unlabeled neighboring nodes are predicted by using the first model, prediction results that are more accurate than those of the initial model can be obtained. Therefore, category distribution of the plurality of neighboring nodes obtained in this way is closer to the potential true distribution than the category distribution obtained in the first round based on the initial model. Still using the foregoing example as an example. The 90 unlabeled neighboring nodes are predicted by using the first model obtained in the first round of training, and 55 neighboring nodes of the category A and 35 neighboring nodes of the category B are determined. With reference to labels of the 10 labeled neighboring nodes, category distribution of the neighboring nodes in a second round is 60:40=3:2. Compared with the category distribution 65:35=13:7 in the first round, the category distribution 60:40=3:2 determined in the second round is closer to the potential true distribution 61:39. If there are 20 sampled nodes, there are 12 sampled nodes of the category A and 8 sampled nodes of the category B in the second round of sampling. A second round of training is performed on the first model based on the 20 sampled nodes that more comply with the potential true distribution to obtain a second model. Performance of the second model is better than performance of the first model. If the unlabeled neighboring nodes are predicted by using the second model, prediction results that are more accurate than those of the first model can be obtained. Therefore, category distribution determined in this way in a third round is closer to the potential true distribution 61:39 compared with the second round. Then, a third round of sampling is performed, and the rest may be deduced by analogy until the model converges. In the foregoing manner, distribution of neighboring nodes used in each round of training is gradually close to the potential true distribution in a multi-round training process. Model performance can be improved by training the model by using sampled nodes obtained through sampling performed by using category distribution close to the true distribution.

In the foregoing implementation, categories of the neighboring node samples are predicted, to obtain the category distribution of the plurality of neighboring node samples. Then, sampling is performed on the plurality of neighboring nodes based on the category distribution, and the model is trained based on the sampled nodes, to perform back propagation on the model parameter. A trained new model continues to predict the categories of the neighboring node samples in a second round of training, and the model is then trained based on the category distribution obtained through prediction. A trained new model continues to repeat the foregoing steps in a third round of training until the model converges. In this way, the multi-round training enables the category distribution of the neighboring node samples predicted by the model to be gradually close to the true distribution, so that a training effect is better, and model performance is improved.

In a possible implementation, the features of the plurality of sampled node samples are input into the initial model for training, to obtain a first model; and a pseudo label of the graph data sample is generated based on the first model, and the first model is trained by using the pseudo label, to obtain the node classification model.

In the foregoing implementation, the unlabeled neighboring nodes are predicted to obtain pseudo labels of the unlabeled neighboring nodes, and then the pseudo labels are used to continuously train the first model. In this way, a quantity of samples participating in training can be increased, and model performance can be improved.

In a possible implementation, the training sampling parameter includes a pseudo label threshold, and confidence of the pseudo label is greater than the pseudo label threshold.

Optionally, the pseudo label threshold may be a threshold set by a user, or may be a default threshold. This is not specifically limited in this application. The confidence refers to a degree of confidence or certainty of a model for a prediction result thereof. In a classification task, the confidence generally refers to a predicted probability or score of a model for a category.

In the foregoing implementation, a pseudo label with high confidence is retained, so that accuracy of the pseudo label participating in training can be improved, noise introduction can be reduced, and a model training effect can be improved. In addition, the quantity of labeled neighboring nodes in the graph data sample is limited, and many neighboring nodes are not labeled. Therefore, there is a specific difference between the data distribution of the labeled neighboring nodes and the data distribution of the true neighboring nodes. Labeling a high-confidence pseudo label causes a training set participating in a next round of training to include the labeled neighboring nodes and neighboring nodes with the pseudo label. Therefore, data distribution of the neighboring nodes in the training set is closer to the data distribution of the potential true neighboring nodes. Accuracy of the model can be further improved by further training the model by using such training set.

In a possible implementation, a round of training is performed on the first model by using the graph data sample labeled with the pseudo label. For a training process, refer to the foregoing content. Then, the second model is verified by using a verification set to obtain a verification result. If the verification result indicates that the model performance deteriorates, the pseudo label is removed. If the verification result indicates that the model performance is improved, the pseudo label is retained. Then, a next round of training is performed, and the rest may be deduced by analogy until the model converges, to obtain the trained node classification model. In this case, model convergence may be that the performance reaches a preset indicator, or may be that the pseudo label cannot further improve the model performance. A specific standard of the model convergence is not limited in this application.

The foregoing performance evaluation standard may be determined based on a specific application scenario. For example, the model performance evaluation standard may include accuracy (accuracy), which indicates a proportion of a quantity of samples correctly predicted by the model to a total quantity of samples; may further include precision (precision) and recall (recall). The precision and the recall are a pair of associated indicators, where the precision indicates a proportion of samples that are actually positive samples in samples that are predicted as positive samples by the model, and the recall indicates a proportion of samples that are predicted as positive samples by the model in samples that are actually positive samples; and may further include an F1 score (F1 score), which is a harmonic mean of the precision and the recall, and may take precision and recall performance of the model into comprehensive consideration. It should be understood that the foregoing examples are used for description. This is not specifically limited in this application.

In the foregoing implementation, a plurality of rounds of training are performed on the model, and the generated pseudo label is verified in each round of training, so that the pseudo label used in each round of training is a pseudo label that can provide a positive beneficial effect for the model. In this way, in the model training process, maximum utilization of information in the unlabeled neighboring node samples can be implemented, to achieve a data enhancement effect. In some scenarios in which a quantity of true labels is small and it is difficult to perform labeling, a large quantity of unlabeled neighboring node samples can also be used to complete model training. In this way, the node classification model obtained through training has better accuracy and robustness.

In addition, in the foregoing training manner, when sampling is performed on the neighboring node samples, sampling distribution is close to the data distribution of the neighboring node samples. When the pseudo label is used to further train the model, data distribution of neighboring node samples labeled with the pseudo label is close to data distribution of neighboring node samples labeled with a true label, so that the data distribution of the neighboring node samples participating in model training is close to the true distribution, thereby avoiding a poor prediction effect of the model on a few categories caused by sample imbalance. It should be understood that, in some application scenarios, for example, in a risk control scenario, a quantity of fraud nodes is far less than a quantity of normal nodes, a category of samples with a small quantity has little impact on a loss function, and is easily ignored in an optimization process. Sample imbalance easily causes difficulty of predicting the fraud nodes by the model. This case can be avoided to a great extent by using the training manner provided in this application.

In a possible implementation, the graph data includes any one of social media network graph data, transaction network graph data, commodity network graph data, knowledge graph, and biomolecular structure graph data.

It should be understood that the node classification method provided in this application is applicable to a wide range of scenarios. A user can flexibly set the inference sampling parameter and the training sampling parameter based on an actual service requirement, so that the node classification method in this application has better universality and stronger feasibility.

According to a second aspect, a graph neural network-based node classification system is provided. The system includes: an obtaining unit, configured to obtain graph data and an inference sampling parameter of a to-be-detected node, where the graph data includes the to-be-detected node and a plurality of neighboring nodes connected to the to-be-detected node; and a prediction unit, configured to input the graph data into a node classification model, to obtain category distribution of the plurality of neighboring nodes, where the prediction unit is configured to perform sampling on the plurality of neighboring nodes based on the inference sampling parameter and the category distribution of the plurality of neighboring nodes, to obtain a plurality of sampled nodes; and the prediction unit is configured to input features of the plurality of sampled nodes and a feature of the to-be-detected node into the node classification model, to obtain a predicted category of the to-be-detected node.

The method described in the first aspect is implemented, the category distribution of the plurality of neighboring nodes in the graph data is first obtained through prediction, sampling is performed on the plurality of neighboring nodes by using the category distribution to obtain the plurality of sampled nodes, and the predicted category of the to-be-detected node is then predicted based on the features of the sampled nodes, thereby reducing calculation complexity. In addition, sampling distribution of the sampled nodes is obtained based on prediction results of the plurality of neighboring nodes instead of being obtained based on labels of a few labeled neighboring nodes, so that the sampled nodes can obtain features of more neighboring nodes, thereby improving prediction accuracy.

In a possible implementation, a similarity between category distribution of the plurality of sampled nodes and the category distribution of the plurality of neighboring nodes is greater than a first threshold.

In a possible implementation, the to-be-detected node includes a labeled node and an unlabeled node, the category distribution of the plurality of neighboring nodes is obtained based on a label of the labeled node and a prediction result of the unlabeled node, and the prediction result of the unlabeled node is obtained by inputting the graph data into the node classification model.

In a possible implementation, the inference sampling parameter includes a quantity of sampled nodes; or the inference sampling parameter includes a quantity of sampling layers, the quantity of sampling layers is used to perform stratified sampling on the plurality of neighboring nodes based on the category distribution of the plurality of neighboring nodes to obtain the plurality of sampled nodes, where each sampling layer includes a plurality of sampled nodes of a same category, and sampled nodes of each category correspond to one or more sampling layers.

In a possible implementation, the inference sampling parameter includes a quantity of sampling times, the quantity of sampling times is used to perform sampling on the plurality of neighboring nodes a plurality of times, the plurality of collected nodes include a plurality of collected node sets, one collected node set corresponds to one time of sampling, the predicted category of the to-be-detected node is obtained based on a plurality of prediction results, and one prediction result is obtained by inputting one sampled node set into the node classification model.

In a possible implementation, the system further includes a training unit and a sampling unit, where the training unit is configured to obtain a graph data sample of a central node and a training parameter before the obtaining unit obtains the graph data and the inference sampling parameter of the to-be-detected node, where the graph data sample includes the central node and a plurality of neighboring node samples connected to the central node, and the training sampling parameter includes a quantity of sampled nodes or a quantity of sampling layers, and the graph data of the to-be-detected node and the graph data sample of the central node are different subgraphs in a same graph; the training unit is configured to input the graph data sample into an initial model to obtain category distribution of the plurality of neighboring node samples; the sampling unit is configured to perform sampling on the plurality of neighboring node samples based on the training sampling parameter and the category distribution of the neighboring node samples, to obtain a plurality of sampled node samples, where the similarity between the category distribution of the plurality of sampled nodes and the category distribution of the plurality of neighboring nodes is greater than a second threshold; and the training unit is configured to input features of the plurality of sampled node samples and a feature of the central node into the initial model for training, to obtain the node classification model.

In a possible implementation, generation time of the plurality of sampled node samples is earlier than generation time of the to-be-detected node.

In a possible implementation, the system includes a label generation unit; the training unit is configured to input the features of the plurality of sampled node samples into the initial model for training, to obtain a first model; and the label generation unit is configured to: generate a pseudo label of the graph data sample based on the first model, and train the first model by using the pseudo label, to obtain the node classification model.

In a possible implementation, the training sampling parameter includes a pseudo label threshold, and confidence of the pseudo label is greater than the pseudo label threshold.

In a possible implementation, the graph data includes any one of social media network graph data, transaction network graph data, commodity network graph data, knowledge graph, and biomolecular structure graph data.

According to a third aspect, a computing device is provided, where the computing device includes a processor and a memory, the memory is configured to store instructions, and the processor is configured to execute the instructions, to cause the computing device to implement the method described in the first aspect.

According to a fourth aspect, a computing device cluster is provided, where the computing device cluster includes at least one computing device, each of the at least one computing device includes a processor and a memory, and the processor of the at least one computing device is configured to execute instructions stored in the memory of the at least one computing device, to cause the computing device cluster to implement the method described in the first aspect.

According to a fifth aspect, a computer-readable storage medium is provided, where the computer-readable storage medium stores instructions, and when the instructions are run by a computing device or a computing device cluster, the method described in the first aspect is implemented.

According to a sixth aspect, a computer program product including instructions is provided, where the computer program product includes the instructions, the instruction can be run on a computing device or software or a program product stored in any usable medium, and when the computer program product runs on the computing device or a computing device cluster, the computing device or the computing device cluster is caused to perform the method described in the first aspect.

### BRIEF DESCRIPTION OF DRAWINGS

FIG. 1 is a diagram of an architecture of a node classification method according to this application;
FIG. 2 is a diagram of a structure of a node classification system according to this application;
FIG. 3 is a schematic flowchart of steps in a training phase of a node classification method according to this application;
FIG. 4 is a schematic flowchart of steps in a training phase of a node classification method in an application scenario according to this application;
FIG. 5 is a schematic flowchart of steps in an inference phase of a node classification method according to this application;
FIG. 6 is a schematic flowchart of steps in an inference phase of a node classification method in an application scenario according to this application;
FIG. 7 is a diagram of an example display interface of a node classification method according to this application; and
FIG. 8 is a diagram of a structure of a computing device according to this application.

### DESCRIPTION OF EMBODIMENTS

First, an application scenario "graph neural network algorithm" in this application is explained and described.

A graph neural network (graph neural network, GNN) is a neural network used to process graph (graph) data, and conventional neural networks can process data in a form of a vector or a matrix. The GNN is dedicated to processing graph data with a complex relationship. The graph data usually includes a plurality of nodes and edges. A node represents an individual or an entity in a graph like a user, and each node has its own feature like a user name. An edge between nodes represents a relationship between the nodes like a friend relationship, and the edge may include a weight or a label, indicating a strength or a type of the relationship. The graph neural network obtains an aggregated feature by aggregating a feature of a central node and a feature of a neighboring node, and then participates in neural network training by using the aggregated feature. A trained model can obtain, based on input graph data of a to-be-detected node, an inference result corresponding to the to-be-detected node.

For example, in a recommendation task scenario, if friend recommendation needs to be performed on a user, information such as the user and a friend, a residence, and interests and hobbies that are associated with the user needs to be input. The information may be represented by using graph structure data, where a node is used to represent a user, an edge between nodes is used to represent a friend relationship between users, and a feature recorded on a node may include a feature of a user corresponding to the node, including information such as a friend, a residence, and interests and hobbies. The graph neural network aggregates the feature of the central node and the features of the surrounding neighboring nodes, inputs the aggregated feature into a neural network for training, performs back propagation on a model parameter of the neural network based on labels and prediction results of the neural network, and obtains a trained model after the model converges. After receiving graph structure data of a new central node, the model can obtain a recommendation result of a user corresponding to the central node based on the graph structure data.

However, one central node in the graph neural network may have a plurality of neighboring nodes. If features of all the neighboring nodes and a feature of the central node are aggregated, calculation complexity is very high, training efficiency and inference efficiency of the graph neural network are low, model performance is poor, and it is difficult to meet an application requirement. If sampling is performed on the neighboring nodes, and features of the neighboring nodes obtained through sampling and the feature of the central node are aggregated, complexity can be reduced, but it is difficult to summarize the features of all the neighboring nodes by using the features of the neighboring nodes obtained through sampling, leading to model performance deterioration.

To resolve problems of high calculation complexity and poor model performance since it is difficult for the graph neural network to aggregate the features of all the neighboring nodes and the feature of the central node, this application provides a node classification system. In the system, category distribution of a plurality of neighboring nodes in graph data is first obtained through prediction, a training sampling parameter input by a user is obtained, and sampling is then performed on a plurality of neighboring node samples in a graph data sample to obtain a plurality of sampled nodes, so that category distribution of the plurality of sampled nodes is similar to or consistent with category distribution of the plurality of neighboring node samples obtained through prediction. In this way, features of the sampled nodes obtained through sampling can not only summarize the features of all the neighboring nodes, but also avoid a poor prediction effect of a model on a few categories caused by sample imbalance. In addition, in the node classification system, considering that future neighboring nodes in an actual inference process cannot participate in inference, generation time of the sampled nodes participating in training is earlier than that of the central node, so that the sampled nodes participating in training can better comply with true distribution in an inference phase, thereby further improving model performance. Finally, a plurality of rounds of training are performed on the model based on the sampled nodes until the model converges, the converged model is used to predict a pseudo label of the neighboring nodes after each round of training is ended, a verification set is used to verify the pseudo label to retain a pseudo label beneficial to the model and remove a pseudo label not beneficial to the model, and a next round of training is then performed, so that the pseudo label used in each round of training is a pseudo label that can provide a positive beneficial effect for the model. In this way, in a model training process, maximum utilization of information in unlabeled neighboring node samples can be implemented, to achieve a data enhancement effect, thereby improving performance of the graph neural network.

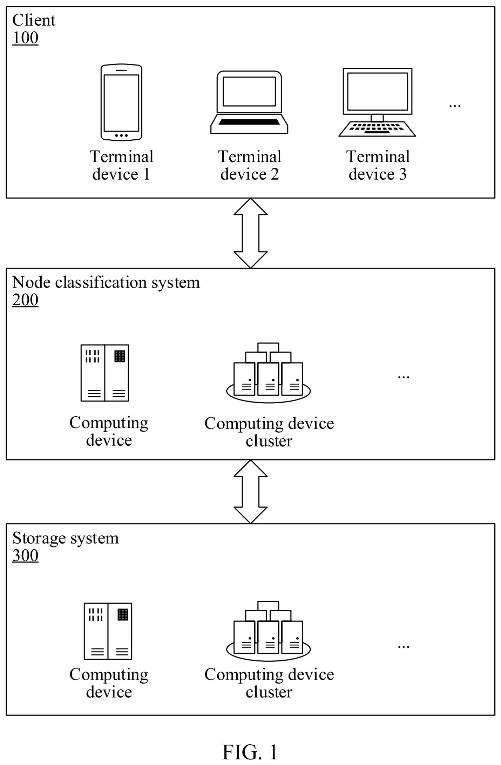

FIG. 1 is a diagram of an architecture of a node classification method according to this application. As shown in FIG. 1, the architecture includes a client 100, a node classification system 200, and a storage system 300. A communication connection is established among the client 100, the node classification system 200, and the storage system 300 by using a network, and may be specifically a wired connection or a wireless connection. This is not specifically limited in this application. There may be one or more clients 100 and storage systems 300 that establish communication connections to the node classification system 200. This is not specifically limited in this application.

The client 100 is configured to implement human-computer interaction, and may be deployed on a terminal device. The terminal device includes a personal computer, a smartphone, a wearable device, a handheld processing device, a tablet computer, a mobile notebook computer, an augmented reality (augmented reality, AR) device, a virtual reality (virtual reality, VR) device, an integrated handheld device, a wearable device, a vehicle-mounted device, a smart conference device, a smart advertising device, a smart home appliance, or the like. The smart home appliance may be a floor sweeping robot, a floor mopping robot, or the like. This is not specifically limited herein.

During specific implementation, the client 100 may be software or an application program that runs on a terminal device or a computing device controlled by a user, for example, a personal computer (personal computer, PC) client, a web client accessed based on a browser, or an application (application, APP) client that runs on a mobile terminal. This is not specifically limited in this application.

Optionally, the client 100 may be a client specially configured to perform node classification, and node categories predicted in different application scenarios are different. For example, in a risk control scenario, the client 100 may be a client configured to predict a user risk category or a risk coefficient. The client may receive graph data input by the user, and feed back a risk coefficient of each node in the graph data to the user. In a recommendation scenario, the client 100 may be a client configured to perform commodity recommendation, and the client may receive graph data input by the user, and feed back a recommendation coefficient or preference of a commodity corresponding to each node in the graph data to the user. Certainly, the client may also be applied to other fields, and examples are not described herein one by one. It should be understood that predicting a recommendation coefficient, preference, or a risk coefficient of a node may also be considered as a classification task of a continuous value, and the continuous value may also be discretized and then trained. For example, the recommendation coefficient is discretized into three categories: low, medium, and high, and then a classification algorithm is used to train a model for prediction. The foregoing example is used for description. This is not specifically limited in this application.

The client 100 may alternatively be some application clients including a node classification plug-in. For example, in a risk control scenario, the client 100 may be an e-commerce management application, and the e-commerce management system includes a submodule of e-commerce risk control and is specially configured to predict a risk coefficient or a risk category of a user who purchases an e-commerce product, where the node category herein is the risk coefficient or the risk category. For example, in a recommendation scenario, the client 100 may be a social media application, and the social media application includes a submodule of user recommendation and is specially configured to predict a friend that the user may want to make or a commodity that the user may want to purchase, where the node category herein is a recommendation coefficient of the user or the commodity. Certainly, the client may also be applied to other fields, and examples are not described herein one by one.

Optionally, the client 100 may be a console (console) of a cloud platform, and is used as a sub-service of the cloud platform to provide a node classification function of nodes for the user. The user may use the node classification method provided in this application by purchasing a cloud service. Optionally, the user may purchase a training service of the node classification method provided in this application. The cloud platform may provide a training platform for the user. The user may input a training sampling parameter and a graph data sample by using the training platform with reference to a service requirement. The cloud platform trains a node classification model by using the node classification method provided in this application. In this way, the obtained node classification model can adapt to the service requirement of the user, and the user can flexibly customize a node classification model that matches a service function of the user. Optionally, the user may also purchase an inference service of the node classification method provided in this application. The cloud platform may provide the trained node classification model for the user. The user may input to-be-detected graph data and an inference sampling parameter into the node classification model to obtain a prediction result. In this way, the obtained node classification model is generally a general-purpose model, and a performance effect is not as strong as that of the flexibly customized classification model. However, the user does not need to train the model, and an operation is more convenient. The user can choose to use the training service or the inference service based on a service requirement of the user. This is not specifically limited in this application. The console may be a web-based client, an application program client, or an application programming interface (application programming interface, API). This is not specifically limited in this application.

The node classification system 200 is configured to receive graph data of a node sent by the client 100, perform node classification based on the graph data to obtain a category of the node, and then return the category to the client 100. In some application scenarios, the node classification system 200 may also send the category of the node to the storage system 300 for storage.

The storage system 300 is configured to receive the category of the node sent by the node classification system 200, and store the category of the node. In different application scenarios, the storage system 300 may have different functions. For example, in a risk control scenario, the category of the node may be a risk category of a user corresponding to the node, and the storage system 300 may store records of a plurality of high-risk users, so that a reminder may be directly given when a high-risk user accesses the storage system next time. It should be understood that the foregoing example is used for description. This is not specifically limited in this application. During specific implementation, the storage system 300 may be a database, a file system, a cloud storage system, or the like. This is not specifically limited in this application.

The node classification system 200 and the storage system 300 may be deployed on a computing device, a computing device cluster, or a terminal device. The computing device includes a bare metal server (Bare Metal Server, BMS), a virtual machine, a container, or an edge computing device. The BMS refers to a general-purpose physical server, for example, an ARM server or an X86 server. The virtual machine refers to a complete computer system that is simulated by using software and that has complete hardware system functions and runs in a completely isolated environment. Any work that can be completed in a physical computer can be implemented in the virtual machine. When creating a virtual machine in the computing device, some hard disks and memory capacities of the physical computer are used as a hard disk and a memory capacity of the virtual machine. Each virtual machine has an independent basic input/output system (basic input/output system, CMOS), a hard disk, and an operating system, and the virtual machine can be operated as a physical machine. The container is a portable software unit that can combine an application and all its dependencies into a software package. The software package is not restricted by an underlying host operating system. In this way, there is no need to construct a complex environment, and a process from application development to deployment is simplified. The edge computing device is a device that is closer to a data source and a terminal user and that has features of a low latency and high bandwidth, for example, intelligent routing or an edge server. The computing device cluster may include a plurality of computing devices, for example, data centers. This is not specifically limited in this application. For descriptions of the terminal device, refer to the foregoing content. Details are not described herein again.

Optionally, the node classification system 200 and the client 100 may be deployed on a same terminal device; the node classification system 200 is deployed on a computing device, and the client 100 is deployed on a terminal device; or the node classification system 200 is deployed on a computing device cluster, and the client 100 is deployed on a terminal device. It should be understood that the foregoing example is used for description. Specifically, deployment statuses of the node classification system 200 and the client 100 may be determined based on an actual application scenario.

Optionally, the node classification system 200 and the storage system 300 may be deployed on a same computing device; the node classification system 200 and the storage system 300 are deployed on different computing devices in a same computing device cluster; or the node classification system 200 and the storage system 300 are deployed on different computing devices in different computing device clusters. This is not specifically limited in this application. For example, the node classification system 200 may be any one of the data centers, and the storage system 300 is deployed on another computing device of the data center, or the storage system 300 is deployed in another data center. The foregoing example is used for description. This is not specifically limited in this application.

The node classification system provided in this application may be applied to a node classification scenario of a graph neural network, including but not limited to a social network analysis scenario, a recommendation scenario, a knowledge graph scenario, a risk control scenario, a bioinformatics scenario, and the like. This is not specifically limited in this application. In the social network analysis scenario, the node classification system 200 provided in this application may be used to predict interests of a user, a community belonging of the user, and the like. In the recommendation scenario, the node classification system 200 provided in this application may be used to predict preference of a user for a commodity. In the knowledge graph scenario, the node classification system 200 provided in this application may be used to perform tasks such as entity classification. In the bioinformatics scenario, the node classification system 200 provided in this application may be used to predict a function category of proteins. It should be understood that the foregoing examples are some examples of the node classification scenario. The node classification system 200 may be further applied to other node classification scenarios. In the following process of explaining the node classification system 200, some examples are introduced to better understand this application, but are not intended to limit an application scenario of this application, and a specific application scenario of the node classification system 200 is not limited in this application.

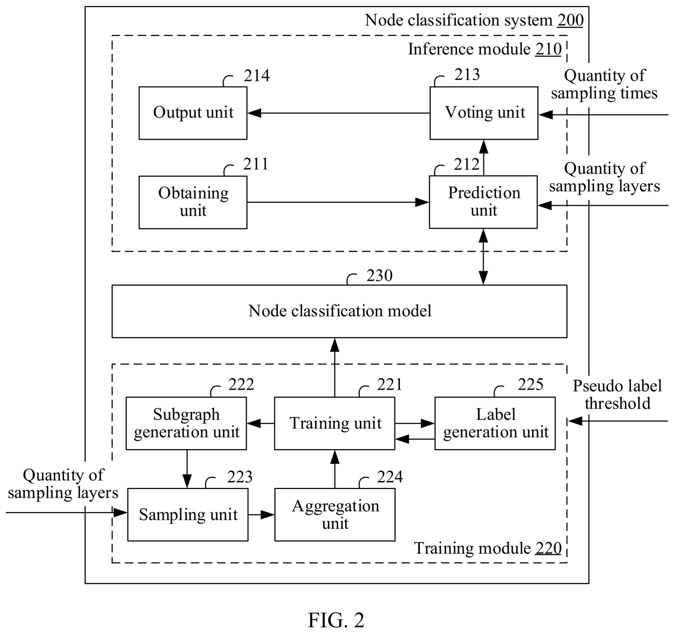

Further, the node classification system 200 in FIG. 2 may be further divided into a plurality of unit modules. For example, FIG. 2 is a diagram of a structure of the node classification system 200 according to this application. As shown in FIG. 2, the node classification system 200 may include a training module 220 and an inference module 210. The training module 220 may include a training unit 221, a subgraph generation unit 222, a sampling unit 223, an aggregation unit 224, and a label generation unit 225. The inference module 210 may include an obtaining unit 211, a prediction unit 212, a voting unit 213, and an output unit 214. It should be understood that FIG. 1 is an example of a division manner. The node classification system 200 may further include more or fewer units. For example, the inference module 210 may further include an inference sampling unit. For example, the training module 220 may not include the label generation unit 225, or the aggregation unit 224 and the training unit 221 are combined into one training unit 221, or the training module 220 may not include the subgraph generation unit 222. Specifically, the unit modules may be determined based on an actual application scenario. This is not specifically limited in this application.

The training unit 221, the subgraph generation unit 222, the sampling unit 223, the aggregation unit 224, the label generation unit 225, the obtaining unit 211, the prediction unit 212, the voting unit 213, and the output unit 214 may be implemented through software or hardware. For example, the following uses the training unit 221 as an example to describe an implementation of the training unit 221. Similarly, for implementations of the subgraph generation unit 222, the sampling unit 223, the aggregation unit 224, the label generation unit 225, the obtaining unit 211, the prediction unit 212, the voting unit 213, and the output unit 214, refer to the implementation of the training unit 221.

The training unit 221 is used as an example of a software functional unit, and the training unit 221 may include code running on a computing instance. The computing instance may include at least one of a physical host (computing device), a virtual machine, and a container. Further, there may be one or more computing instances. For example, the training unit 221 may include code running on a plurality of hosts/virtual machines/containers. It should be noted that the plurality of hosts/virtual machines/containers configured to run the code may be deployed in a same data center, or may be deployed in different data centers. When the plurality of hosts/virtual machines/containers configured to run the code are deployed in different data centers, the different data centers may be distributed in a same region (region), or may be distributed in different regions. The region herein is used to describe a position of the data center. Data centers in a same region share common services such as elastic computing, block storage, and object storage. The different data centers may also be distributed in a same availability zone (availability zone, AZ), or may be distributed in different AZs, each AZ includes one data center or a plurality of data centers that are geographically close to each other. An AZ is a collection of one or more physical data centers. Within an AZ, computing, network, storage, and other resources are logically divided into a plurality of clusters. Generally, one region may include a plurality of AZs, and the plurality of AZs in one region are connected by using a high-speed optical fiber, to meet a requirement of a user for constructing a cross-AZ high-availability system.

The training unit 221 is used as an example of a hardware functional unit, and the training unit 221 may also be a device implemented by using an application-specific integrated circuit (application-specific integrated circuit, ASIC), a programmable logic device (programmable logic device, PLD), or the like. The PLD may be implemented by using a complex programmable logic device (complex programmable logic device, CPLD), a field programmable gate array (field programmable gate array, FPGA), generic array logic (generic array logic, GAL), or any combination thereof. For example, the training unit 221 may be implemented by using a data processor (data processing unit, DPU). This is not limited in this application.

It should be noted that the structure shown in FIG. 2 may be an implementation in which the node classification system 200 is deployed on a single computing device. When the node classification system 200 is deployed on a computing device cluster including a plurality of computing devices, different computing devices in the computing device cluster may separately store instructions for implementing functions of the training unit 221, the subgraph generation unit 222, the sampling unit 223, the aggregation unit 224, the label generation unit 225, the obtaining unit 211, the prediction unit 212, the voting unit 213, and the output unit 214. For example, a computing device A in the computing device cluster stores instructions for implementing the training module 220, and specifically includes instructions for implementing the functions of the training unit 221, the subgraph generation unit 222, the sampling unit 223, the aggregation unit 224, and the label generation unit 225; and a computing device B stores instructions for implementing the inference module 210, and specifically includes instructions for implementing the functions of the obtaining unit 211, the prediction unit 212, the voting unit 213, and the output unit 214. This is not specifically limited in this application. Certainly, different computing devices may alternatively store same instructions. For example, both the computing device B and a computing device C store instructions of the obtaining unit 211, the prediction unit 212, the voting unit 213, and the output unit 214, and are configured to implement the functions of the obtaining unit 211, the prediction unit 212, the voting unit 213, and the output unit 214 in combination. This is not specifically limited in this application.

The training unit 221, the subgraph generation unit 222, the sampling unit 223, and the aggregation unit 224 in the training module 220 are configured to train a node classification model and run in a model training phase. The obtaining unit 211, the prediction unit 212, the voting unit 213, and the output unit 214 in the inference module 210 are configured to perform inference by using the node classification model and run in a model inference phase.

The following describes functions of each unit module in the training module 220 in the node classification system 200.

The obtaining unit 211 is configured to obtain a graph data (graph) sample of a central node and an initial model, and send the graph data sample and the initial model to the training unit 221. The training unit 221 is configured to input the graph data sample into the initial model to obtain prediction results of one or more neighboring node samples of the central node.

Optionally, the initial model may be obtained by training a graph neural network by using a labeled sample or an unlabeled sample. The graph neural network may include a graph sample and aggregate (graph sample and aggregate, GraphSAGE) network, a graph convolutional network (graph convolutional network, GCN), a graph attention network (graph attention network, GAT), or the like. Alternatively, the initial model may be a supervised model, like a random forest (Random Forest) or a multilayer perceptron (Multilayer Perceptron, MLP). This is not specifically limited in this application.

Optionally, the graph data sample input into the initial model is graph structure data, the graph data sample includes a plurality of nodes and a plurality of edges, different nodes are used to represent different things, and associated nodes are connected to each other by an edge. During specific implementation, in different application scenarios, the nodes and the edges of the graph data sample may represent different information. For example, in a case of describing a commodity network, each node in the graph data sample may be used to represent a different commodity. If two commodities are often purchased by a same user, a purchase relationship between the two commodities may be represented by using one edge; or if one commodity depends on use or existence of another commodity, this dependency may also be represented by using one edge. In a case of describing a transaction network, each node in the graph data sample may be used to represent a different transaction. If delivery addresses of two transactions are the same, an association relationship between the two transactions may be represented by using one edge; or if consignees of two transactions are the same, an association relationship between the two transactions may also be represented by using one edge. It should be understood that in the foregoing example, there is only one node category, that is, all nodes are commodities or all nodes are users. In some embodiments, there may be a plurality of node categories and a plurality of edge categories. In other words, the graph data sample may be a heterogeneous graph (heterogeneous graph) including nodes and edges of different types. In addition, an edge of the graph data sample may be directed or undirected. This is not limited in this application.

It should be noted that a graph data sample participating in training may be obtained after an application is sent to a user or a related department and is approved and authorized, and graph data that is not authorized or approved cannot be used as a sample for training.

Further, the node in the graph data sample further has corresponding feature information. The feature information is used to describe a feature of the node. The feature may be an attribute, a status, content, or the like of the node, and may be specifically determined based on an actual application scenario. For example, the feature information of the node in the commodity network may be a commodity type (for example, daily necessities, clothing, or food), purchase time, a purchase user, or the like. The feature information of the node in the transaction network may be transaction time, a transaction delivery address, a transaction payee, a transaction payer, or the like. This is not specifically limited in this application. It should be understood that the foregoing examples are used for description, and the node classification method provided in this application may be further used to process a graph data sample in another application scenario. This is not specifically limited in this application.

Further, the node in the graph data sample may further include a label, and the label of the node is a true category of the node. In addition, the graph data sample may include a labeled node and an unlabeled node. In other words, each node in the graph data sample may have a label, or may not have a label, or some nodes have labels, and some nodes do not have labels. This is not specifically limited in this application. In embodiments of this application, categories corresponding to the label are different in different application scenarios. For example, in an application scenario of commodity recommendation, the label of the node may be a category corresponding to the node, and the category may be a continuous value, for example, a recommendation coefficient, or may be discrete categories, for example, the label is classified into highly recommended, relatively recommended, and not recommended. In a risk control scenario, the label of the node may be a category corresponding to the node, and the category may be a continuous value, for example, a risk coefficient, or may be discrete categories, for example, the label is classified into high-risk, medium-risk, and low-risk. This is not specifically limited in this application.

Optionally, the neighboring node sample of the central node may be a node directly connected to the central node, that is, another node connected to the central node by using an edge is a neighboring node sample of the central node. The neighboring node sample may also be a node indirectly connected to the central node, that is, a first neighboring node sample is directly connected to the central node, and a second neighboring node sample connected to the first neighboring node sample may also be referred to as a neighboring node sample of the central node. This type of neighboring node sample may be referred to as a 2-hop neighboring node sample. Similarly, a 3-hop neighboring node sample, a 4-hop neighboring node sample, or the like may be obtained. This is not specifically limited in this application. It should be understood that the neighboring node sample in embodiments of this application may include a one-hop neighboring node sample, or may include a neighboring node sample with two or more hops. This may be specifically determined based on an actual application scenario. This is not specifically limited in this application.

Optionally, the prediction results of the one or more neighboring node samples obtained by the initial model may be a predicted category or a predicted score obtained for each neighboring node sample. For example, in an application scenario of commodity recommendation, the prediction result may be a recommendation score or a recommendation category of the neighboring node sample, for example, highly recommended, relatively recommended, or not recommended. For another example, in a risk control scenario, the prediction result may be a risk coefficient or a risk level of the neighboring node sample, for example, high-risk, medium-risk, and low-risk. The foregoing examples are used for description. This is not specifically limited in this application.

Optionally, the initial model may predict an unlabeled neighboring node sample in the graph data sample, to obtain a prediction result of the unlabeled neighboring node sample, and may not predict a neighboring node sample that already has a label. During specific implementation, the initial model may predict a category of each unlabeled neighboring node sample in the graph data sample, or may predict some unlabeled neighboring node samples. This may be specifically determined based on an actual application scenario. For example, in an actual application scenario, if a scale of the graph data sample is small, the initial model may directly predict a classification result of all unlabeled neighboring node samples. If a scale of the graph data sample is large, the initial model cannot predict a classification result of all unlabeled neighboring node samples, in this case, adjacent subgraphs may be selected from the graph data sample according to a preset selection policy, and then unlabeled neighboring node samples in the adjacent subgraphs are predicted. The selection policy herein may include but is not limited to: sorting a plurality of neighboring nodes based on a degree of proximity to generation time of the central node, and selecting the adjacent subgraphs based on a sorting result. It should be understood that the foregoing example is used for description, and different selection policies are used in different application scenarios. This is not specifically limited in this application.

The subgraph generation unit 222 is configured to obtain a subgraph sample of the graph data sample based on the generation time of the central node and generation time of the neighboring node samples, where the subgraph sample includes a central node and a plurality of neighboring node samples, the central node of the subgraph sample is the central node in the graph data sample, and the plurality of neighboring node samples in the subgraph sample are neighboring node samples whose generation time is earlier than that of the central node in the graph data sample.

It can be learned with reference to the foregoing content that, each node in the graph data sample has corresponding feature information, and the generation time may be a feature of the neighboring node sample and the central node. Definitions of the generation time are different in different scenarios. For example, in a graph data sample of a transaction network in the foregoing example, each node represents a transaction, and the generation time may be transaction time. Transaction time of a transaction corresponding to the neighboring node sample in the subgraph sample is earlier than transaction time of a transaction corresponding to the central node. For another example, in a graph data sample of a social network, each node represents a social media account, and the generation time may be creation time of the account. In this case, creation time of an account corresponding to the neighboring node sample in the subgraph sample is earlier than creation time of an account corresponding to the central node. The foregoing examples are used for description. This is not specifically limited in this application.

It may be understood that, in a model inference process, generation time of the neighboring node sample is earlier than that of the central node. Because a future neighboring node cannot participate in inference in an actual inference process, neighboring node samples whose generation time is earlier than that of the central node are also used to participate in model training in a model training process, so that the plurality of neighboring node samples in the subgraph sample can better comply with true distribution, and performing model training based on the subgraph sample can improve accuracy of a trained model in an inference phase.

In the foregoing implementation, the graph data sample is first input into the initial model to obtain the prediction results of the neighboring node samples in the graph data sample, and then the subgraph sample is obtained based on the generation time of the neighboring node samples. In another possible implementation, the node classification system 200 may first obtain an initial subgraph of the graph data sample by using the subgraph generation unit 222, where generation time of neighboring node samples in the initial subgraph is earlier than that of the central node, but the neighboring node samples in the initial subgraph include a true label, and some of the neighboring node samples may be unlabeled nodes; then the node classification system may input the initial subgraph into the initial model by using the training unit 221, to obtain a prediction result of each unlabeled neighboring node sample in the initial subgraph, so as to obtain a subgraph sample in which generation time of each neighboring node sample is earlier than that of the central node and each neighboring node sample includes a true label or a prediction result.

The sampling unit 223 is configured to perform sampling on the subgraph sample based on the prediction results of the plurality of neighboring node samples, to obtain a plurality of sampled nodes. Specifically, the plurality of sampled nodes are nodes selected from the plurality of neighboring node samples in the subgraph sample according to a sampling policy. It should be understood that, sampling is performed on the plurality of neighboring node samples in the subgraph sample, and model training is performed based on the sampled nodes, so that a calculation amount can be reduced, and model training efficiency can be improved.

In a possible implementation, the sampling policy may include: a similarity between category distribution of the plurality of sampled nodes and category distribution of the plurality of neighboring node samples in the subgraph sample is greater than a second threshold. The category distribution of the plurality of neighboring node samples herein refers to category distribution of a labeled neighboring node and an unlabeled neighboring node. A category of the unlabeled neighboring node may be determined based on a prediction result, and a category of the labeled neighboring node may be determined based on a label of the neighboring node. In this way, each neighboring node may have a corresponding category, to obtain the category distribution of the plurality of neighboring node samples. It should be understood that a quantity of labeled neighboring nodes in the graph data sample is limited, and many neighboring node samples are not labeled. Therefore, there is a specific difference between data distribution of the labeled neighboring nodes and data distribution of potential true neighboring nodes. In this application, data distribution determined based on prediction results of the neighboring node samples and labels of the labeled neighboring nodes is closer to the true distribution, and the sampled nodes obtained by performing sampling on the neighboring nodes based on the data distribution can summarize features of the neighboring nodes. In addition, this feature is a feature close to a feature of the potential true distribution. Using such sampled nodes to participate in model training can not only reduce calculation complexity, but also improve model performance.

For example, it is assumed that a central node in a subgraph node includes 100 neighboring nodes, and there are 61 true nodes of a category A and 39 nodes of a category B in the 100 neighboring nodes, that is, a potential true distribution proportion is 61:39. However, there are actually only 10 labeled neighboring nodes, and the remaining 90 nodes are unlabeled neighboring nodes, where five labeled neighboring nodes are of the category A, and five labeled neighboring nodes are of the category B. Therefore, category distribution obtained based on the labeled neighboring nodes is 1:1, which is greatly different from the potential true distribution proportion 61:39. If sampling is performed based on the category distribution of the labeled neighboring nodes, a large difference between the sampled data distribution and the true distribution is caused, leading to a poor model training effect.

According to the node classification method provided in this application, the 90 unlabeled neighboring nodes are first predicted by using the initial model. It is assumed that 60 unlabeled neighboring nodes are predicted to be of the category A, and 30 unlabeled neighboring nodes are predicted to be of the category B. In this case, it may be determined, based on prediction results of the unlabeled neighboring nodes and labels of the labeled neighboring nodes, that category distribution of the 100 neighboring nodes in a first round is 65:35=13:7. If there are 20 sampled nodes, there are 13 sampled nodes of the category A and 7 sampled nodes of the category B. It should be understood that, compared with the category distribution 1:1 obtained based on the labeled neighboring nodes, the category distribution 13:7 obtained based on the prediction results of the unlabeled neighboring nodes and the labels of the labeled neighboring nodes is closer to the potential true distribution 61:39. If sampling is performed based on the category distribution obtained based on the prediction results of the unlabeled nodes and the labels of the labeled nodes, sampled nodes that more comply with the true distribution can be obtained, and model performance can be improved by performing model training based on the sampled nodes.

Further, a first round of training is performed on the model by using the 20 sampled nodes that comply with the potential true distribution, to obtain a trained first model. A prediction capability of the first model is better than that of the initial model used in the first round. When categories of the unlabeled neighboring nodes are predicted by using the first model, prediction results that are more accurate than those of the initial model can be obtained. Therefore, category distribution of the plurality of neighboring nodes obtained in this way is closer to the potential true distribution than the category distribution obtained in the first round based on the initial model. Still using the foregoing example as an example. The 90 unlabeled neighboring nodes are predicted by using the first model obtained in the first round of training, and 55 neighboring nodes of the category A and 35 neighboring nodes of the category B are determined. With reference to labels of the 10 labeled neighboring nodes, category distribution of the neighboring nodes in a second round is 60:40=3:2. Compared with the category distribution 65:35=13:7 in the first round, the category distribution 60:40=3:2 determined in the second round is closer to the potential true distribution 61:39. If there are 20 sampled nodes, there are 12 sampled nodes of the category A and 8 sampled nodes of the category B in the second round of sampling. A second round of training is performed on the first model based on the 20 sampled nodes that more comply with the potential true distribution to obtain a second model. Performance of the second model is better than performance of the first model. If the unlabeled neighboring nodes are predicted by using the second model, prediction results that are more accurate than those of the first model can be obtained. Therefore, category distribution determined in this way in a third round is closer to the potential true distribution 61:39 compared with the second round. Then, a third round of sampling is performed, and the rest may be deduced by analogy until the model converges. In the foregoing manner, distribution of neighboring nodes used in each round of training is gradually close to the potential true distribution in a multi-round training process. Model performance can be improved by training the model by using sampled nodes obtained through sampling performed by using category distribution close to the true distribution.

During specific implementation, the category distribution of the plurality of neighboring node samples around the central node may be first determined based on the prediction results of the plurality of neighboring node samples obtained by the training unit 221 and labels of the neighboring node samples, and sampling is then performed on the plurality of neighboring node samples based on the category distribution and a training sampling parameter. During specific implementation, the training sampling parameter may be set by the user in advance.

Optionally, the training sampling parameter may include a quantity of sampled nodes, that is, a quantity of neighboring node samples that need to be sampled. In this case, a quantity of sampled nodes of each category may be determined based on the category distribution of the neighboring node samples, so that the category distribution of the finally obtained sampled nodes is similar to or consistent with the category distribution of the neighboring node samples.

Optionally, the training sampling parameter may include a quantity of sampling layers, and the quantity of sampling layers is used to perform stratified sampling on the plurality of neighboring node samples, so that the category distribution of the finally obtained sampled nodes is similar to or consistent with the category distribution of the neighboring node samples. During specific implementation, after the category distribution of the plurality of neighboring node samples is obtained, the plurality of neighboring node samples may be classified into a plurality of layers based on the quantity of sampling layers, where samples at each layer are samples of a same category. Then, stratified sampling is performed at different sampling layers, so that the category distribution of the plurality of sampled nodes obtained through sampling is similar to or consistent with the category distribution of the plurality of neighboring node samples. Specifically, different stratified sampling methods may be used based on requirements, for example, equidistant stratified sampling and equal-proportional stratified sampling. This is not specifically limited in this application.

It should be noted that the quantity of sampling layers input by the user may be the same as or different from a quantity of categories of the neighboring node samples. In other words, samples of a same category may be classified into one layer, or may be classified into a plurality of layers. For example, if the neighboring node samples have five categories, and the quantity of sampling layers set by the user is 10, neighboring node samples of one category are classified into two layers. This is not specifically limited in this application. It may be understood that, a quantity of neighboring node samples of a category may be apparently less than that of another category. A category is divided into a plurality of layers, and sampling is performed at each layer, so that impact of a classification imbalance problem of neighboring node samples on model training can be reduced. In addition, neighboring node samples from a same category are selected from a plurality of different layers, so that the sampled neighboring node samples can better represent a characteristic of the entire category, and can better cover different features and a change trend of the category. Therefore, when a model trained by using such sampled nodes processes a new unknown sample, the model can better adapt to a change of each layer, so that the trained model has a stronger generalization capability.

It should be understood that sampling can be completed only by using a sampling quantity and the category distribution of the neighboring node samples, sampling can also be completed only by using the quantity of sampling layers and the distribution of the neighboring node samples, or sampling can also be completed based on a sampling quantity, the quantity of sampling layers, and the category distribution of the neighboring node samples. In this application, the training sampling parameter is not limited. In addition, the quantity of sampling layers and the sampling quantity are specific implementations of the training sampling parameter provided in this application, and an example in which the training sampling parameter includes the quantity of sampling layers is used in FIG. 2. However, the training sampling parameter may alternatively be another parameter that can cause the category distribution of the plurality of finally collected sampled nodes to be similar to or consistent with the category distribution of the neighboring node samples. This is not limited in this application.

In some application scenarios, a feature of the node in the graph data sample does not include a feature in a time dimension. In this case, sampling may be directly performed on the graph data sample to obtain the plurality of sampled nodes. In other words, after prediction results of the neighboring node samples are obtained by using the initial model, each neighboring node sample in the graph data sample has a corresponding category. The category may be a true category provided by a true label, or may be a category predicted based on the prediction result. Then, stratified sampling is performed on the plurality of neighboring node samples in the graph data sample based on the category distribution formed by the plurality of neighboring node samples and the training sampling parameter input by the user, to obtain the plurality of sampled nodes.

It should be understood that the foregoing solutions are merely some possible implementations provided in this application, but are not intended to limit the protection scope of this application. Any equivalent repair or replacement readily figured out by a person skilled in the art within the technical scope disclosed in this application shall fall within the protection scope of this application.

The aggregation unit 224 is configured to aggregate features of the plurality of sampled nodes and a feature of the central node, to obtain an aggregated feature of the central node.

During specific implementation, vectorization may be first performed on the features of the sampled nodes and the feature of the central node, to obtain feature vectors of the sampled nodes and a feature vector of the central node, and then feature aggregation of the plurality of sampled nodes and the central node is implemented by using an aggregate function.

Optionally, the aggregate function may include a summation pooling function, an average pooling function, a maximum pooling function, an attention function, and the like. Summation pooling refers to performing weighted summation on the feature vectors of the sampled nodes and the feature vector of the central node, to obtain the aggregated feature. Average pooling refers to performing weighted averaging on the feature vectors of the sampled nodes and the feature vector of the central node, to obtain the aggregated feature. Maximum pooling refers to using a maximum value of the feature vectors of the sampled nodes and the feature vector of the central node as the aggregated feature. The attention function is used to calculate weights of the central node and different sampled nodes, so that an important node feature can be automatically concerned in an aggregation process, and then the aggregated feature is obtained in a weighted summation or weighted averaging manner. During specific implementation, a most proper aggregate function may be selected based on an actual application scenario and a service requirement to obtain the aggregated feature of the central node. This is not limited in this application.

In embodiments of this application, after the aggregation unit 224 obtains the aggregated feature of the central node, the training unit 221 trains the initial model based on the aggregated feature until the model converges, to obtain the trained first model. During specific implementation, the training unit 221 may input the aggregated feature into the initial model to obtain an output result of the model, obtain a loss value (loss) based on a difference between the output result and a label of the central node, perform back propagation on a model parameter of the initial model based on the loss value to obtain an updated initial model, input a graph data sample of a new central node into the updated initial model, generate a new subgraph sample by using the subgraph generation unit 222, perform sampling on the new subgraph sample by using the sampling unit 223 to obtain new sampled nodes, aggregate features of the new sampled nodes and a feature of the new central node by using the aggregation unit 224 to obtain a new aggregated feature, input the new aggregated feature into the updated initial model to obtain a new output result, obtain a loss value based on a difference between the new output result and a label of the new central node, and perform back propagation on the updated initial model again based on the loss value, to obtain a re-updated initial model. By analogy, a plurality of rounds of iterative updates are performed until the model converges, to obtain the first model.

During specific implementation, a plurality of graph data samples participating in training may be different subgraphs of a same large graph or graph data set at a same moment. Each subgraph may include a same node or different nodes. A graph data sample used in each round of training is a subgraph corresponding to a different central node in the large graph or graph data. For example, graph data at a moment includes a node 1 to a node 10. In this case, a graph data sample 1 may use the node 1 as a central node and use the node 2 to the node 10 as neighboring node samples; a graph data sample 2 may use the node 2 as a central node and use the node 1, and the node 3 to the node 10 as neighboring node samples; and so on. This is not limited in this application. Graph data samples participating in training may alternatively be different subgraphs of a same large graph at different time. For example, a graph data sample 1 is a transaction network including transaction records before August 8, a graph data sample 2 is a transaction network including transaction records before August 9, and the graph data sample 2 includes some content in the graph data sample 1. The foregoing example is used for description. This is not limited in this application.

It should be understood that, in this application, the subgraph sample is obtained based on the graph data sample, sampling is then performed on the subgraph sample to obtain the sampled nodes, and then the model is trained based on the aggregated feature of the sampled nodes and the central node. This not only ensures that the generation time of the neighboring node samples participating in training is earlier than that of the central node, but also ensures that data distribution of the neighboring node samples participating in the training is close to data distribution of all neighboring node samples, so that a feature learned in the training phase is closer to a feature in the inference phase, thereby improving model accuracy.

The label generation unit 225 is configured to input the graph data sample into the trained first model, to obtain the prediction results of the neighboring node samples in the graph data sample, and generate a pseudo label of the neighboring node samples based on the prediction results of the neighboring node samples. It can be learned with reference to the foregoing content that, the graph data sample includes a labeled node and an unlabeled node, and the label generation unit 225 may generate a pseudo label of the unlabeled node, and then retain a true label of the labeled node.

Optionally, confidence (confidence) of the pseudo label generated by the label generation unit 225 is greater than a pseudo label threshold, where the pseudo label threshold may be a threshold set by the user, or may be a default threshold. This is not specifically limited in this application. The confidence refers to a degree of confidence or certainty of a model for a prediction result thereof. In a classification task, the confidence generally refers to a predicted probability or score of a model for a category.

It should be understood that, a pseudo label with high confidence is retained, so that accuracy of the pseudo label participating in training can be improved, noise introduction can be reduced, and a model training effect can be improved. In addition, the quantity of labeled neighboring nodes in the graph data sample is limited, and many neighboring nodes are not labeled. Therefore, there is a specific difference between the data distribution of the labeled neighboring nodes and the data distribution of the true neighboring nodes. Labeling a high-confidence pseudo label causes a training set participating in a next round of training to include the labeled neighboring nodes and neighboring nodes with the pseudo label. Therefore, data distribution of the neighboring nodes in the training set is closer to the data distribution of the potential true neighboring nodes. Accuracy of the model can be further improved by further training the model by using such training set.

In an embodiment, the training unit 221 may perform one round of training on the first model by using a graph data sample labeled with the pseudo label. For a training process, refer to the descriptions of the subgraph generation unit 222, the sampling unit 223, and the aggregation unit 224, to obtain a second model. Then, the second model is verified by using a verification set to obtain a verification result. If the verification result indicates that the model performance deteriorates, the pseudo label is removed. If the verification result indicates that the model performance is improved, the pseudo label is retained. Then, a next round of training is performed, and the rest may be deduced by analogy until the model converges, to obtain a trained node classification model 230. In this case, model convergence may be that the performance reaches a preset indicator, or may be that the pseudo label cannot further improve the model performance. A specific standard of the model convergence is not limited in this application.

The foregoing performance evaluation standard may be determined based on a specific application scenario. For example, the model performance evaluation standard may include accuracy (accuracy), which indicates a proportion of a quantity of samples correctly predicted by the model to a total quantity of samples; may further include precision (precision) and recall (recall). The precision and the recall are a pair of associated indicators, where the precision indicates a proportion of samples that are actually positive samples in samples that are predicted as positive samples by the model, and the recall indicates a proportion of samples that are predicted as positive samples by the model in samples that are actually positive samples; and may further include an F1 score (F1 score), which is a harmonic mean of the precision and the recall, and may take precision and recall performance of the model into comprehensive consideration. It should be understood that the foregoing examples are used for description. This is not specifically limited in this application.

In the foregoing training manner, a plurality of rounds of training are performed on the model, and the generated pseudo label is verified in each round of training, so that the pseudo label used in each round of training is a pseudo label that can provide a positive beneficial effect for the model. In this way, in the model training process, maximum utilization of information in the unlabeled neighboring node samples can be implemented, to achieve a data enhancement effect. In some scenarios in which a quantity of true labels is small and it is difficult to perform labeling, a large quantity of unlabeled neighboring node samples can also be used to complete model training. In this way, the node classification model 230 obtained through training has better accuracy and robustness.

In addition, in the foregoing training manner, when sampling is performed on the neighboring node samples, sampling distribution is close to the data distribution of the neighboring node samples. When the pseudo label is used to further train the model, data distribution of neighboring node samples labeled with the pseudo label is close to data distribution of neighboring node samples labeled with a true label, so that the data distribution of the neighboring node samples participating in model training is close to the true distribution, thereby avoiding a poor prediction effect of the model on a few categories caused by sample imbalance. It should be understood that, in some application scenarios, for example, in a risk control scenario, a quantity of fraud nodes is far less than a quantity of normal nodes, a category of samples with a small quantity has little impact on a loss function, and is easily ignored in an optimization process. Sample imbalance easily causes difficulty of predicting the fraud nodes by the model. This case can be avoided to a great extent by using the training manner provided in this application.

The following describes functions of each unit module in the inference module 210.

The obtaining unit 211 is configured to receive graph data and an inference sampling parameter that are of a to-be-predicted node and that are sent by the client 100.

During specific implementation, the graph data may include the to-be-predicted node, and further include a plurality of neighboring nodes of the to-be-predicted node. The to-be-predicted node herein is the central node in the foregoing content. To distinguish between the central node in the training phase and a central node in the inference phase, in the following content, the central node in the training phase is collectively referred to as a central node, and the central node in the inference phase is collectively referred to as a to-be-predicted node.

Optionally, the graph data of the to-be-predicted node and the graph data sample used in the training phase may be different subgraphs in a same graph, or different subgraphs of a same graph in different time periods. For example, the to-be-predicted node may be a node newly added to the graph data sample. For example, after the model is trained by using the graph data sample corresponding to the transaction network to obtain the node classification model 230, when a transaction is newly added to the transaction network and whether the transaction is a high-risk transaction needs to be predicted, the newly added transaction may be used as a to-be-predicted node, and other nodes associated with the newly added transaction are used as neighboring nodes to generate graph data of the to-be-predicted node. For another example, after the node classification model 230 is obtained through training by using the graph data sample corresponding to the commodity recommendation network, when a commodity is newly added to the commodity recommendation network and preference of a user for the commodity needs to be predicted, the newly added commodity may be used as a to-be-predicted node, and other commodities associated with the newly added commodity are used as neighboring nodes to generate graph data of the to-be-detected node. It should be understood that the foregoing examples are used for description. This is not specifically limited in this application.

During specific implementation, the inference sampling parameter includes a sampling quantity or a quantity of sampling layers. For descriptions of the sampling quantity and the quantity of sampling layers, refer to the related descriptions in the training phase. Details are not described herein again. It should be noted that the sampling quantity and the quantity of sampling layers that are input by the user in the inference phase may be the same as or different from the sampling quantity and the quantity of sampling layers in the training phase. This is not specifically limited in this application.

The prediction unit 212 is configured to input the graph data of the to-be-predicted node into the node classification model 230, to obtain one or more prediction results of the to-be-detected node based on the inference sampling parameter and a quantity of sampling times that are input by the user.

Optionally, the prediction unit 212 may input the graph data into the node classification model 230 to obtain predicted categories of the plurality of neighboring nodes of the to-be-detected node, perform sampling on the plurality of neighboring nodes based on the predicted categories of the plurality of neighboring nodes, category distribution of true labels, and the inference sampling parameter input by the user, to obtain a plurality of sampled nodes, aggregate features of the plurality of sampled nodes and a feature of the to-be-detected node to obtain an aggregated feature, and input the aggregated feature into the node classification model 230 to obtain a prediction result of the to-be-detected node.

Optionally, the inference sampling parameter may further include the quantity of sampling times. The prediction unit 212 may further perform sampling on the plurality of neighboring nodes a plurality of times based on the quantity of sampling times input by the user, where one sampled node set may be obtained in each round of sampling; and perform feature aggregation based on a plurality of sampled node sets obtained through the plurality of times of sampling, to obtain an aggregated feature corresponding to each round of sampling, so as to obtain a plurality of prediction results. The quantity of sampling times is the same as a quantity of prediction results. Different neighboring nodes exist in sampled node sets obtained through sampling performed for different times. This ensures that a feature of each neighboring node can participate in model inference to a maximum extent, and improves prediction accuracy of the model.

It should be noted that, if a neighboring node whose generation time is later than that of the to-be-detected node exists in the graph data, the prediction unit 212 may first generate, based on the descriptions of the subgraph generation unit 222, a to-be-detected subgraph corresponding to the graph data, where generation time of a neighboring node in the to-be-detected subgraph is earlier than that of the to-be-detected node, and then perform sampling on the to-be-detected subgraph a plurality of times based on the inference sampling parameter and the quantity of sampling times. For specific descriptions of sampling, refer to the related descriptions of the sampling unit 223. Details are not described herein again. The sampling quantity and the quantity of sampling layers in the inference sampling parameter may be the same as or different from the training sampling parameter in the training phase. This may be specifically determined based on an actual application scenario. This is not specifically limited in this application.

The voting unit 213 is configured to determine a predicted category of the to-be-detected node based on the quantity of sampling times input by the user and the plurality of prediction results generated by the prediction unit 212.

During specific implementation, the voting unit 213 may determine the predicted category of the to-be-detected node by using a voting policy like majority voting, weighted voting, probability fusion, or a voting threshold. The majority voting refers to voting based on the prediction results, and a category with a largest quantity of votes is determined as the predicted category of the to-be-detected node. The weighted voting refers to assigning a weight to each prediction result, calculating an average value of weights to obtain a final prediction result, and determining the predicted category of the to-be-detected node based on the final prediction result. The probability fusion may be calculating an average probability or a maximum probability of a probability value corresponding to each prediction result, to obtain a fused probability, and then determining the predicted category of the to-be-detected node based on the fused probability. The voting threshold refers to setting a threshold, and when a quantity of votes of only a category with a largest quantity of votes exceeds the threshold, the category may be determined as the predicted category of the to-be-detected node. It should be understood that the foregoing examples are used for description, and the voting policy used by the voting unit 213 is not limited in this application.

It should be noted that, the voting policy may alternatively be a voting policy set by the user, specifically, may be a plurality of voting policies provided by the node classification system 200 for the user for selection, or may be a voting policy compiled by the user. This is not limited in this application.

The output unit 214 is configured to feed back the predicted category determined by the voting unit 213 to the client 100.

During specific implementation, the output unit 214 may alternatively send the predicted category to the storage system 300 for storage. Specifically, whether the prediction result is sent to the client 10 or the storage system 300, or is fed back to both the client and the storage system may be determined based on an actual service scenario. This is not specifically limited in this application.

In conclusion, this application provides a node classification system. In the system, category distribution of a plurality of neighboring node samples in a graph data sample is first obtained through prediction, a training sampling parameter input by a user is obtained, and sampling is then performed on the plurality of neighboring node samples in the graph data sample to obtain a plurality of sampled nodes, so that data distribution of the plurality of sampled nodes is similar to or consistent with data distribution of the plurality of neighboring node samples obtained through prediction. In this way, the data distribution of the sampled nodes obtained through sampling is closer to distribution of potential true neighboring nodes, and model performance can be improved by using the sampled nodes obtained in this manner to participate in model training. In addition, in the node classification system, considering that future neighboring nodes in an actual inference process cannot participate in inference, generation time of the sampled nodes participating in training is earlier than that of a central node, so that the sampled nodes participating in training can better comply with true distribution in an inference phase, thereby further improving model performance. Finally, a plurality of rounds of training are performed on a model based on the sampled nodes until the model converges, the converged model is used to predict a high-confidence pseudo label of the neighboring nodes after each round of training is ended, a verification set is used to verify the pseudo label to retain a pseudo label beneficial to the model and remove a pseudo label not beneficial to the model, and a next round of training is then performed, so that the pseudo label used in each round of training is a pseudo label that can provide a positive beneficial effect for the model. In this way, in the model training process, maximum utilization of information in unlabeled neighboring node samples can be implemented, to achieve a data enhancement effect. In addition, a high-confidence pseudo label is labeled, so that category distribution of a finally obtained new training set including labeled samples and samples with the pseudo label is closer to the potential true distribution, and accuracy of the model can be further improved by further training the model by using such training set, thereby improving performance of a graph neural network.

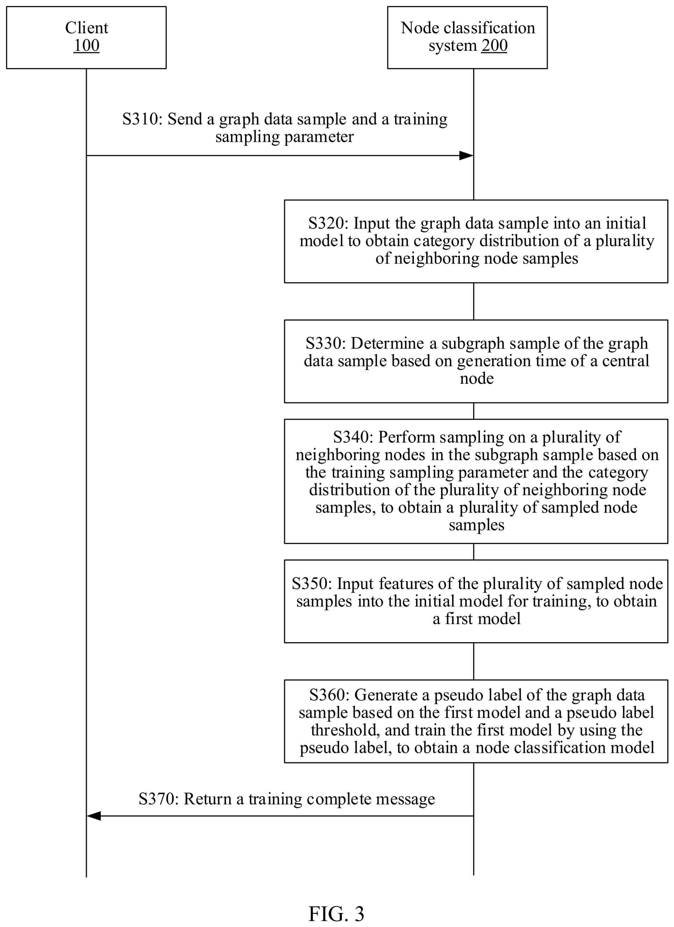

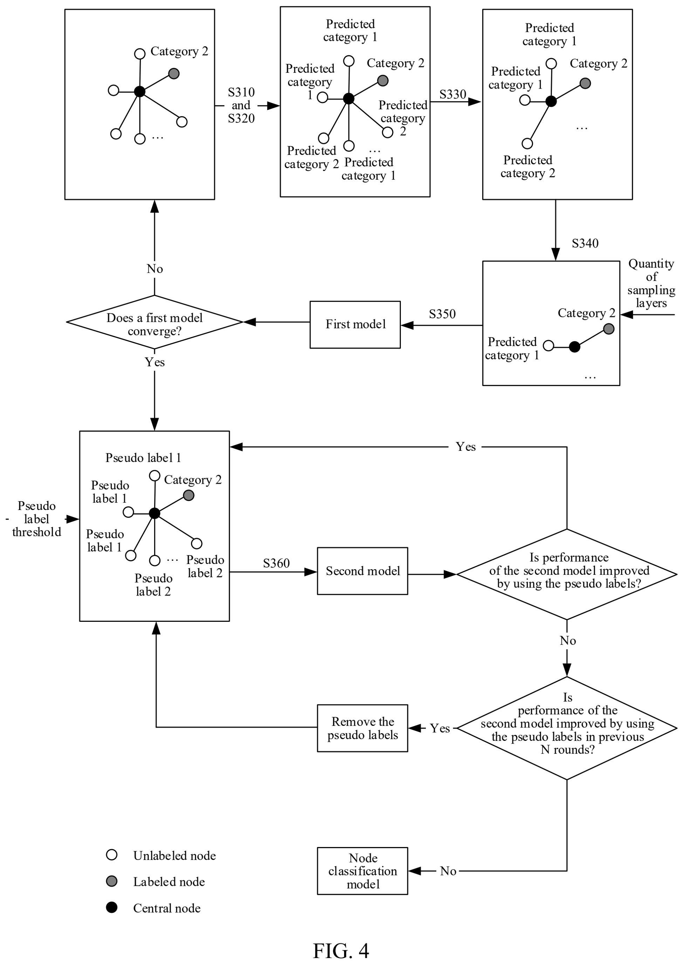

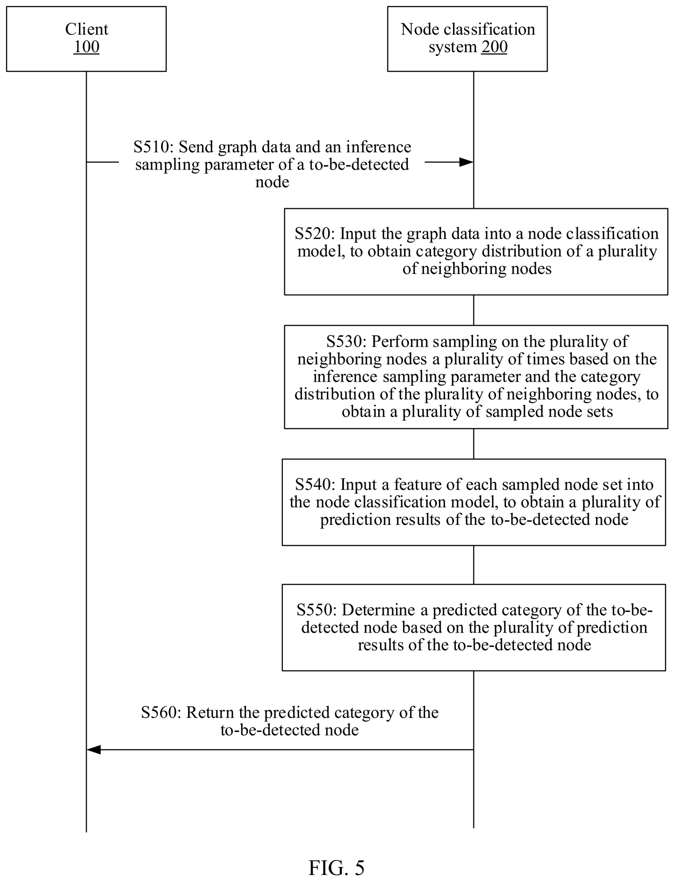

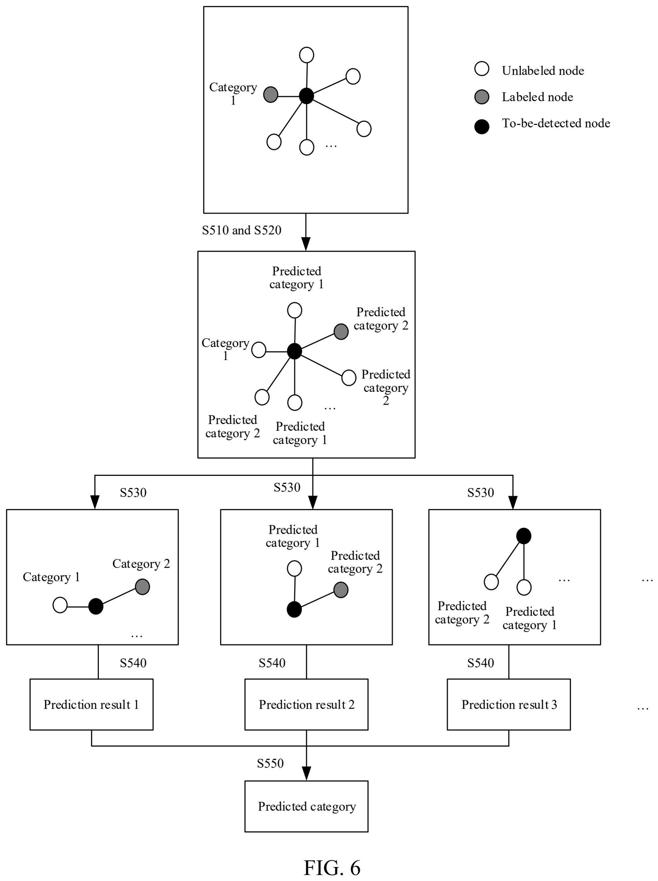

The foregoing describes in detail the node classification system provided in this application with reference to FIG. 1 and FIG. 2. The following describes a node classification method provided in this application with reference to FIG. 3 to FIG. 6. FIG. 3 and FIG. 4 describe a procedure of steps in a model training phase in a node classification method provided in this application, and FIG. 5 and FIG. 6 describe a procedure of steps in a model inference phase in the node classification method provided in this application.

FIG. 3 is a schematic flowchart of steps in a training phase of a node classification method according to this application. The method may be applied to the node classification system 200 shown in FIG. 1 and FIG. 2. As shown in FIG. 3, a model training method in the node classification method may include the following steps.

S310. A client 100 sends a graph data sample and a training sampling parameter to a node classification system 200. This step may be implemented by the obtaining unit 211 in the embodiment in FIG. 2.

The graph data sample is a graph data sample of a central node, and the graph data sample includes the central node and one or a plurality of neighboring nodes connected to the central node. The central node of the graph data sample may include a label, and the plurality of neighboring nodes may include a labeled node and an unlabeled node. The label herein is a true category of the node, and both the central node and the neighboring node have corresponding feature information. For specific explanations of the graph data sample, refer to the related descriptions in the embodiment in FIG. 2. Details are not described herein again.

In embodiments of this application, the training sampling parameter may include one or more of a sampling quantity, a quantity of sampling layers, and a pseudo label threshold. For descriptions of the sampling quantity, the quantity of sampling layers, and the pseudo label threshold in the training sampling parameter, refer to the related descriptions in the embodiment in FIG. 2. Details are not described herein again.

S320. The node classification system 200 inputs the graph data sample into an initial model, to obtain category distribution of a plurality of neighboring node samples. This step may be implemented by the training unit 221 in the embodiment in FIG. 2.

It can be learned from the foregoing content that, the plurality of neighboring nodes in the graph data sample include a labeled node and an unlabeled node. The initial model may predict the unlabeled node to obtain a predicted category of the unlabeled node, and then determine the category distribution of the plurality of neighboring nodes in the graph data sample based on a label of the labeled node and the predicted category of the unlabeled node, that is, a proportion of each category of neighboring node in the plurality of neighboring nodes. The initial model may be obtained by training a graph neural network by using a labeled sample or an unlabeled sample. The graph neural network may include a GraphSAGE network, a GCN, a GAT, or the like. Alternatively, the initial model may be a supervised model, like a random forest (Random Forest) or a multilayer perceptron (Multilayer Perceptron, MLP). This is not specifically limited in this application.

For details, refer to the related descriptions in the embodiment in FIG. 2. Details are not described herein again.

S330. The node classification system 200 determines a subgraph sample of the graph data sample based on generation time of the central node. This step may be implemented by the subgraph generation unit 222 in the embodiment in FIG. 2.

In embodiments of this application, the subgraph sample includes a central node and a plurality of neighboring node samples. The central node of the subgraph sample is the central node in the graph data sample, and the plurality of neighboring node samples in the subgraph sample are neighboring node samples whose generation time is earlier than that of the central node in the graph data sample. It may be understood that, in a model inference process, generation time of the neighboring node sample is earlier than that of the central node. Because a future neighboring node cannot participate in inference in an actual inference process, neighboring node samples whose generation time is earlier than that of the central node are also used to participate in model training in a model training process, so that the plurality of neighboring node samples in the subgraph sample can better comply with true distribution, and performing model training based on the subgraph sample can improve accuracy of a trained model in an inference phase. For specific descriptions of the generation time, refer to the related descriptions in the embodiment in FIG. 2. Details are not described herein again.

The subgraph sample obtained in step S310 to step S330 is a possible implementation. In another possible implementation, the node classification system 200 may alternatively first obtain an initial subgraph of the graph data sample, where generation time of neighboring node samples in the initial subgraph is earlier than that of the central node, but the neighboring node samples in the initial subgraph include a true label, and some of the neighboring node samples may be unlabeled nodes; then the node classification system may input the initial subgraph into the initial model, to obtain a prediction result of each unlabeled neighboring node sample in the initial subgraph, so as to obtain a subgraph sample in which generation time of each neighboring node sample is earlier than that of the central node and each neighboring node sample includes a true label or a prediction result.

S340. The node classification system 200 performs sampling on the plurality of neighboring nodes in the subgraph sample based on the training sampling parameter and the category distribution of the plurality of neighboring node samples, to obtain a plurality of sampled node samples. This step may be implemented by the sampling unit 223 in the embodiment in FIG. 2.

In embodiments of this application, a similarity between category distribution of the plurality of sampled nodes and the category distribution of the plurality of neighboring node samples in the subgraph sample is greater than a second threshold. Such a sampling method helps maintain category balance of the sampled nodes, and ensures that a sufficient quantity of neighboring node samples of each category participate in the model training process, thereby improving model accuracy.

In a possible implementation, the plurality of sampled nodes may be obtained based on the sampling quantity in the training sampling parameter. Specifically, the category distribution of the sampled nodes may be determined based on the category distribution of the neighboring nodes, and the category distribution of the neighboring nodes and the category distribution of the sampled nodes are the same or similar. Then, a quantity of sampled nodes of each category is determined based on the category distribution of the sampled nodes and the sampling quantity, and neighboring nodes of a corresponding quantity and category are selected from the plurality of neighboring nodes, to obtain the plurality of sampled nodes.

In another possible implementation, the plurality of sampled nodes may be obtained based on the quantity of sampling layers in the training sampling parameter. During specific implementation, after the category distribution of the plurality of neighboring node samples is obtained, a quantity of neighboring node samples of each category may be determined based on a total quantity of neighboring node samples, and a quantity of neighboring node samples included in each sampling layer is then determined based on the quantity of sampling layers input by a user and categories of the neighboring node samples. Samples at one sampling layer are samples of a same category, and samples of one category may correspond to one or more sampling layers. Then, sampling is performed at different sampling layers. In this way, the category distribution of the plurality of sampled nodes obtained through sampling is similar to or consistent with the category distribution of the plurality of neighboring node samples. Specifically, different sampling methods may be used based on requirements, for example, simple random sampling and stratified cluster sampling. This is not specifically limited in this application.

It should be noted that the quantity of sampling layers input by the user may be the same as or different from a quantity of categories of the neighboring node samples. In other words, samples of a same category may be classified into one layer, or may be classified into a plurality of layers. It may be understood that a quantity of neighboring node samples of a category may be apparently less than that of another category. A category is classified into a plurality of layers, and sampling is performed at each layer, so that impact of a classification imbalance problem of neighboring node samples on model training can be reduced.

For example, it is assumed that the quantity of sampling layers input by the user is 6, and the category distribution of the neighboring node samples is 1:2:3, that is, the quantity of categories of the neighboring node samples is 3. Therefore, a first category may be allocated to a first layer, a second category may be allocated to a second layer and a third layer, and a third category may be allocated to a fourth layer to a sixth layer. Assuming that the total quantity of neighboring node samples is N, a quantity of neighboring node samples at each layer is N/6. Then, one neighboring node sample is randomly selected from each layer as one round of sampling, and a plurality of rounds of random sampling are performed. In this way, category distribution of collected nodes obtained in each round of collection is 1:2:3, to ensure that the obtained category distribution of the sampled nodes is the same as or similar to the category distribution of the neighboring nodes. The foregoing example is used for description. This is not specifically limited in this application.

In some application scenarios, a feature of the node in the graph data sample does not include a feature in a time dimension. In this case, sampling may be directly performed on the graph data sample to obtain the plurality of sampled nodes. In other words, after prediction results of the neighboring node samples are obtained by using the initial model, each neighboring node sample in the graph data sample has a corresponding category. The category may be a true category provided by a true label, or may be a category predicted based on the prediction result. Then, stratified sampling is performed on the plurality of neighboring node samples in the graph data sample based on the category distribution formed by the plurality of neighboring node samples and the training sampling parameter input by the user, to obtain the plurality of sampled nodes.

S350. The node classification system 200 inputs features of the plurality of sampled node samples into the initial model for training, to obtain a first model. This step may be implemented by the aggregation unit 224 and the training unit 221 in the embodiment in FIG. 2.

In embodiments of this application, vectorization may be first performed on the features of the sampled node samples and a feature of the central node, to obtain feature vectors of the sampled node samples and a feature vector of the central node, next, feature aggregation of the plurality of sampled node samples and the central node is implemented by using an aggregate function, to obtain an aggregated feature of the central node, and then the initial model is trained based on the aggregated feature until the model converges, to obtain a trained first model.

Optionally, the aggregate function may include a summation pooling function, an average pooling function, a maximum pooling function, an attention function, and the like. For specific explanations of the plurality of functions, refer to the related descriptions of the aggregation unit 224 in the embodiment in FIG. 2. Details are not described herein again. During specific implementation, a most proper aggregate function may be selected based on an actual application scenario and a service requirement to obtain the aggregated feature of the central node. This is not limited in this application.

In embodiments of this application, when the initial model is trained based on the aggregated feature, the aggregated feature may be first input into the initial model to obtain an output result, a loss is obtained based on a difference between the output result and a label of the central node, a model parameter of the initial model is adjusted based on the loss to obtain an updated initial model, a graph data sample of a new central node is then input into the updated initial model to generate a new subgraph sample, sampling is performed on the new subgraph sample to obtain new sampled nodes, features of the new sampled nodes and a feature of the new central node are aggregated to obtain a new aggregated feature, the new aggregated feature is input into the updated initial model to obtain a new output result, a loss is obtained based on a difference between the new output result and a label of the new central node, and a model parameter of the updated initial model is adjusted again based on the loss to obtain a re-updated initial model. By analogy, a plurality of rounds of training is performed until the model converges, to obtain the first model.

It should be understood that, in this application, the subgraph sample is obtained based on the graph data sample, sampling is then performed on the subgraph sample to obtain the sampled nodes, and then the model is trained based on the aggregated feature of the sampled nodes and the central node. This not only ensures that the generation time of the neighboring node samples participating in training is earlier than that of the central node, but also ensures that data distribution of the neighboring node samples participating in the training is close to data distribution of all neighboring node samples, so that a feature learned in the training phase is closer to a feature in the inference phase, thereby improving model accuracy.

S360. The node classification system 200 generates a pseudo label of the graph data sample based on the first model and the pseudo label threshold, and trains the first model by using the pseudo label, to obtain a node classification model. This step may be implemented by the label generation unit 225 and the training unit 221 in the embodiment in FIG. 2.

In embodiments of this application, confidence (confidence) of the pseudo label is greater than the pseudo label threshold input by the user. It should be understood that, a pseudo label with high confidence is retained, so that accuracy of the pseudo label participating in the training can be improved, noise introduction can be reduced, and a model training effect can be improved. In addition, a quantity of labeled samples in the graph data sample is limited, and many samples are not labeled. Therefore, there is a specific difference between data distribution of the labeled samples and actual true distribution. Labeling a high-confidence pseudo label causes finally obtained category distribution of a new training set including the labeled samples and samples with the pseudo label to be closer to the potential true distribution. Accuracy of the model can be further improved by further training the model by using such training set.

In embodiments of this application, a round of training is performed on the first model by using the graph data sample labeled with the pseudo label, to obtain a second model. Then, the second model is verified by using a verification set to obtain a verification result. If the verification result indicates that the model performance deteriorates, the pseudo label is removed. If the verification result indicates that the model performance is improved, the pseudo label is retained. Then, a next round of training is performed until the model converges, to obtain the trained node classification model.

In the foregoing implementation, a plurality of rounds of training are performed on the model, and the generated pseudo label is verified in each round of training, so that the pseudo label used in each round of training is a pseudo label that can provide a positive beneficial effect for the model. In this way, in the model training process, maximum utilization of information in the unlabeled neighboring node samples can be implemented, to achieve a data enhancement effect. In some scenarios in which a quantity of true labels is small and it is difficult to perform labeling, a large quantity of unlabeled neighboring node samples can also be used to complete model training. In this way, the node classification model 230 obtained through training has better accuracy and robustness. In addition, when the pseudo label is used to further train the model, data distribution of a training set including the pseudo label and the true labels is closer to true data distribution, thereby improving model performance. It should be understood that, in some application scenarios, for example, in a risk control scenario, a quantity of fraud nodes is far less than a quantity of normal nodes, a category of samples with a small quantity has little impact on a loss function, and is easily ignored in an optimization process. Sample imbalance easily causes difficulty of predicting the fraud nodes by the model. This case can be avoided to a great extent by using the training manner provided in this application.

S370. The node classification system 200 returns a training complete message to the client 100.

In an embodiment, the user may generate graph data based on historical service data of the user, then input the graph data and the training sampling parameter into the node classification system 200, and wait for the node classification system 200 to complete training of a node classification model based on the graph data. After receiving the training completion message from the node classification system 200, the user may input graph data updated over time into the node classification model, to obtain a predicted category of a newly added node. The node classification model obtained in this training manner can adapt to a service scenario of the user, and a more accurate classification result can be obtained in a prediction phase.

The procedure of steps shown in FIG. 3 is a possible implementation of this application. This application further provides other possible implementations. The following summarizes the possible implementations.

In a first possible implementation, a graph data sample is input into an initial model to obtain category distribution of a plurality of neighboring node samples, sampling is then performed on a plurality of neighboring nodes in a plurality of subgraph samples based on a training sampling parameter and the category distribution of the plurality of neighboring node samples, to obtain a plurality of sampled node samples, and then features of the plurality of sampled node samples are input into an initial model for training to obtain a node classification model. The training module 220 of the node classification system in this implementation includes only the sampling unit 223, the training unit 221, and the aggregation unit 224. A procedure of steps of this implementation includes step S310 and step S330 to step S350.

In another possible implementation, after category distribution of a plurality of neighboring node samples is obtained, a subgraph sample of a graph data sample is determined based on generation time of a central node, sampling is performed on the subgraph sample to obtain a plurality of sampled node samples, and features of the plurality of sampled node samples are input into an initial model for training, to obtain a first model. The training module of the node classification system in this implementation includes the sampling unit 223, the training unit 221, the aggregation unit 224, and the subgraph generation unit 222. A procedure of steps of this implementation includes step S310 to step S350.

In another possible implementation, after a first model is obtained, a pseudo label of a graph data sample is generated based on the first model and a pseudo label threshold, and the first model is trained by using the pseudo label, to obtain a node classification model. The training module of the node classification system in this implementation includes the sampling unit 223, the training unit 221, the aggregation unit 224, the subgraph generation unit 222, and the label generation unit 225. A procedure of steps of this implementation includes step S310 to step S370.

It should be understood that the plurality of solutions listed above are merely some possible implementations provided in this application, but are not intended to limit the protection scope of this application. Any equivalent repair or replacement readily figured out by a person skilled in the art within the technical scope disclosed in this application shall fall within the protection scope of this application.

To better understand this application, the following describes step S310 to step S370 by using an example with reference to FIG. 4. FIG. 4 is a schematic flowchart of steps in a training phase of a node classification method in an application scenario according to this application. In the application scenario shown in FIG. 4, graph data of a central node includes a plurality of neighboring nodes, and the plurality of neighboring nodes include a labeled node and an unlabeled node. For example, FIG. 4 shows four unlabeled nodes and one labeled node, and a label of the labeled node is a category 2.

S310 is performed to obtain a training sampling parameter and a graph data sample. The training sampling parameter may include a quantity of sampling layers and a pseudo label threshold. It is assumed that the quantity of sampling layers is 2, and the pseudo label threshold is X.

S320 is performed to input the graph data sample into an initial model, to obtain a predicted category of each unlabeled node, and further obtain that category distribution of the neighboring nodes is 1:1. That is, 50% of the neighboring nodes are of a category 1 and 50% of the neighboring nodes are of the category 2.

S330 may be performed to determine a subgraph sample of the graph data sample based on generation time of the central node and generation time of the neighboring nodes. Generation time of each neighboring node in the subgraph sample is earlier than the generation time of the central node. For example, the subgraph sample shown in FIG. 4 includes two samples of the category 1 and two samples of the category 2. Therefore, category distribution of the neighboring nodes in the subgraph sample is 1:1.

S340 is performed to perform sampling on the subgraph sample based on the quantity of sampling layers input by a user, to obtain a plurality of sampled node samples. Category distribution of the sampled node samples is the same as the category distribution of the plurality of neighboring nodes in the subgraph sample. Therefore, in the example shown in FIG. 4, the quantity of sampling layers is 2, a first layer corresponds to neighboring node samples of the category 1, and a second layer corresponds to neighboring node samples of the category 2. Random sampling is performed at the first layer and the second layer in turn. The category distribution of the neighboring nodes in the subgraph sample is 1:1. Therefore, a quantity of sampled node samples of the category 1 is the same as a quantity of sampled node samples of the category 2. For a specific procedure of steps of performing stratified sampling based on the quantity of sampling layers, refer to the detailed descriptions of S340 and the sampling unit 223. Details are not described herein again.

S350 is performed to aggregate features of the plurality of sampled nodes and a feature of the central node to obtain an aggregated feature of the central node, input the aggregated feature into the initial model to obtain an output result, and perform back propagation on a model parameter of the initial model based on a loss value between the output result and a label of the central node, to obtain a first model. If the first model does not converge, the first model may continue to be trained by using a graph data sample of a new central node, a new aggregated feature is obtained through S310 to S350 again, the first model is re-trained by using the new aggregated feature, and the rest may be deduced by analogy until the first model converges. Convergence herein may refer to a state in which model performance stops being significantly improved and tends to be stable. In different application scenarios, determining conditions of the convergence are different. For example, the convergence condition may be that a loss function reaches a stable state, and it may be considered that the model converges in terms of the loss function. For another example, the convergence condition may be that a parameter change of the model reaches a stable state, and when the model parameter no longer need to be adjusted, it may be considered that the model converges in terms of the parameter. For another example, the convergence condition may be that accuracy of the model reaches a stable state, and it may be considered that the model converges in terms of the accuracy. The foregoing examples are used for description. This is not specifically limited in this application.

After the first model converges, step S360 may be performed. In this way, the graph data sample is input into the first model to obtain a prediction result of each neighboring node, a prediction result whose confidence exceeds the pseudo label threshold X is retained as a pseudo label of the neighboring node based on the pseudo label threshold X input by the user, to obtain a graph data sample carrying the pseudo label, the first model is trained by using the graph data sample, an aggregated feature of the graph data sample carrying the pseudo label is obtained again through S310 to S350, the first model is trained by using the aggregated feature to obtain a second model, and the second model is then verified on a verification set. If model performance of the second model deteriorates compared with that of the first model, the pseudo label generated in this round of training is removed. If the model performance is improved, the pseudo label used in this round of training is retained. Then, a next round of training is performed. In the next round of training, a new pseudo label is generated by using a new graph data sample, the first model is re-trained, an aggregated feature of a graph data sample carrying the new pseudo label is obtained through S310 to S350, the first model is trained by using the aggregated feature to obtain a second model, the second model is then verified on the verification set again, and the pseudo label used in this round of training is retained or removed based on a verification result until performance of the second model cannot be improved in N consecutive rounds. In this case, the model training ends, and a trained node classification model is obtained.

According to the training method provided in this application, in an early stage, sampling is continuously performed on neighboring nodes to obtain sampled nodes that comply with data distribution of neighboring node samples, and then a model is trained by using an aggregated feature of the sampled nodes. This not only reduces a calculation amount, but also ensures that data distribution of the sampled nodes is close to true distribution, thereby avoiding a poor prediction effect of the model on a few categories caused by sample imbalance. In a later stage, the model is further trained by using a pseudo label, so that nodes that are not sampled can also be sampled through a plurality of rounds of training. In addition, the generated pseudo label is verified in each round of training, so that the pseudo label used in each round of training is a pseudo label that can provide a positive beneficial effect for the model. In this way, in a model training process, maximum utilization of information in unlabeled neighboring node samples can be implemented, to achieve a data enhancement effect. In some scenarios in which a quantity of true labels is small and it is difficult to perform labeling, a large quantity of unlabeled neighboring node samples can also be used to complete model training. In this way, the node classification model 230 obtained through training has better accuracy and robustness.

The foregoing describes in detail, with reference to FIG. 3 and FIG. 4, the procedure of steps of model training in the node classification method provided in this application. The following explains and describes, with reference to FIG. 5 and FIG. 6, a procedure of steps of model inference in the node method provided in this application.

FIG. 5 is a schematic flowchart of steps in an inference phase of a node classification method according to this application. As shown in FIG. 5, the method may include the following steps.

S510. A client 100 sends graph data and an inference sampling parameter of a to-be-detected node to a node classification system 200. This step may be implemented by the obtaining unit 211 in the embodiment in FIG. 2.

Optionally, the inference sampling parameter includes a sampling quantity and a quantity of sampling layers, and definitions of the sampling quantity and the quantity of sampling layers are the same as those of the sampling quantity and the quantity of sampling layers in the training sampling parameter. It should be noted that, the quantity of sampling layers and the sampling quantity that are input by the user in the inference phase may be the same as or different from the quantity of sampling layers and the sampling quantity in the training phase. This is not specifically limited in this application.

Optionally, the inference sampling parameter further includes a quantity of sampling times. The quantity of sampling times is a quantity of times that the node classification system 200 performs sampling on a plurality of neighboring nodes. It should be understood that if the user does not input the quantity of sampling times, one time of sampling may be performed, and a prediction result obtained based on the sampling is a predicted category of the to-be-detected node.

S520. The node classification system 200 inputs the graph data into a node classification model, to obtain category distribution of the plurality of neighboring nodes. This step may be implemented by the prediction unit 212 in the embodiment in FIG. 2.

A specific implementation of this step is similar to step S320 in the training phase, and details are not described herein again.

S530. The node classification system 200 performs sampling on the plurality of neighboring nodes a plurality of times based on the inference sampling parameter and the category distribution of the plurality of neighboring nodes, to obtain a plurality of sampled node sets. This step may be implemented by the prediction unit 212 in the embodiment in FIG. 2.

During specific implementation, the node classification system 200 may perform sampling on the plurality of neighboring nodes a plurality of times based on the quantity of sampling times in the inference sampling parameter. One sampled node set may be obtained through each round of sampling. An intersection set may exist between different sampled node sets. In addition, a similarity between category distribution of sampled nodes in each sampled node set and categories of the plurality of neighboring nodes is greater than a first threshold.

It should be noted that, if a neighboring node whose generation time is later than that of the to-be-detected node exists in the graph data, a to-be-detected subgraph corresponding to the graph data may be first generated, where generation time of a neighboring node in the to-be-detected subgraph is earlier than that of the to-be-detected node, and sampling is then performed on the to-be-detected subgraph a plurality of times based on the inference sampling parameter and the quantity of sampling times.

A specific implementation of this step is similar to step S330 in the training phase, and details are not described herein again.

S540. The node classification system 200 inputs a feature of each sampled node set into the node classification model, to obtain a plurality of prediction results of the to-be-detected node. This step may be implemented by the prediction unit 212 in the embodiment in FIG. 2.

During specific implementation, one prediction result of the to-be-detected node may be obtained by inputting one sampled node set into the node classification model. In other words, one sampled node set corresponds to one prediction result.

S550. The node classification system 200 determines the predicted category of the to-be-detected node based on the plurality of prediction results of the to-be-detected node. This step may be implemented by the voting unit 213 in the embodiment in FIG. 2.

During specific implementation, the predicted category of the to-be-detected node may be determined by using a voting policy like majority voting, weighted voting, probability fusion, or a voting threshold. For descriptions of the voting policy, refer to the related descriptions of the voting unit 213. Details are not described herein again.

S560. The node classification system 200 returns the predicted category of the to-be-detected node to the client 100. This step may be implemented by the output unit 214 in the embodiment in FIG. 2.

Optionally, the node classification system 200 may send the predicted category to the storage system 300 for storage. It should be understood that, after the predicted category of the to-be-detected node is obtained, there may be different service procedures for the predicted category in different application scenarios. This is not specifically limited in this application.

To better understand this application, the following describes step S510 to step S560 by using an example with reference to FIG. 6. FIG. 6 is a schematic flowchart of steps in an inference phase of a node classification method in an application scenario according to this application. In the application scenario shown in FIG. 6, graph data of a to-be-detected node includes a plurality of neighboring nodes, and the plurality of neighboring nodes include a labeled node and an unlabeled node. For example, FIG. 4 shows four unlabeled nodes and one labeled node, and a label of the labeled node is a category 1. It should be noted that structures of the graph data in FIG. 6 and FIG. 4 are very similar. However, in an actual application scenario, the structure of the graph data in the inference phase is the same as or different from the structure of the graph data in the training phase. This is not specifically limited in this application.

S510 is performed to obtain graph data and an inference sampling parameter. The inference sampling parameter includes a quantity of sampling layers and a quantity of sampling times. It is assumed that the quantity of sampling layers is 2, and the quantity of sampling times is Y.

S520 is performed to input the graph data into a node classification model, to obtain predicted categories of a plurality of neighboring nodes in the graph data, and further obtain that category distribution of the neighboring nodes is 1:1. That is, 50% of the neighboring nodes are of the category 1 and 50% of the neighboring nodes are of a category 2. The node classification model is a model obtained through training in S310 to S370 in FIG. 4 and FIG. 5.

S530 is performed to obtain Y sampled node sets based on the quantity Y of sampling times in the inference sampling parameter. FIG. 6 shows three sampled node sets as an example, and sampled nodes in each sampled node set are different. However, in actual application, an intersection set may exist in some sampled node sets in the Y sampled node sets. This is not limited in this application.

S540 is performed to input each sampled node set into the node classification model, to obtain a plurality of prediction results of the to-be-detected node.

S550 is performed to determine a predicted category of the to-be-detected node based on the plurality of prediction results. For example, voting is performed, based on the plurality of prediction results, on a category to which the to-be-detected node belongs, and a category with a largest quantity of votes is the predicted category of the to-be-detected node.

It should be understood that, in the foregoing inference manner, the plurality of prediction results are obtained through a plurality of times of sampling, and the predicted category of the to-be-detected node is obtained through voting based on the plurality of prediction results, so that impact of random sampling on the prediction results can be reduced, thereby improving stability and reliability of a final result.

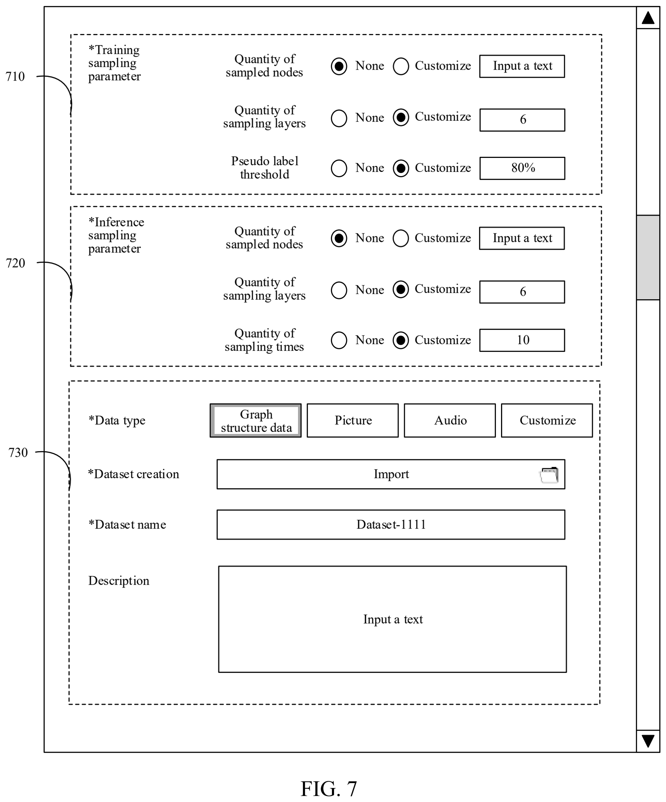

To better understand this application, the following further describes the node classification method provided in this application with reference to FIG. 7. FIG. 7 is a diagram of an example display interface of a node classification method according to this application. The interface shown in FIG. 7 is an example. This is not specifically limited in this application. As shown in FIG. 7, the interface may include a first input region 710, a second input region 720, and a third input region 730.

The first input region 710 is used to input a training sampling parameter, including but not limited to one or more of a quantity of sampled nodes, a quantity of sampling layers, and a pseudo label threshold. For descriptions of the quantity of sampled nodes, the quantity of sampling layers, and the pseudo label threshold, refer to the content in embodiments in FIG. 2 to FIG. 4. Details are not described herein again.

The second input region 720 is used to input an inference sampling parameter, including but not limited to one or more of a quantity of sampled nodes, a quantity of sampling layers, and a quantity of sampling times. For descriptions of the quantity of sampled nodes, the quantity of sampling layers, and the quantity of sampling times, refer to the content in embodiments in FIG. 2, FIG. 5, and FIG. 6. Details are not described herein again.

The third input region 730 is used to input a graph data sample used in a training phase. FIG. 7 shows some parameter settings of the graph data sample as an example, including but not limited to a data type, a dataset name, an import manner, descriptions, and the like. This is not limited in this application. An input manner of graph data used in an inference phase is similar to that of the third input region 730, and is not shown in FIG. 7. It should be understood that FIG. 7 is an example interface. In an actual application scenario, the first input region 710, the second input region 720, and the third input region 730 may further include more content. In addition, the interface shown in FIG. 7 may further include more input regions, for example, an input region of the graph data of the to-be-detected node used in the inference phase described above. This application imposes no limitation on FIG. 7.

It may be understood that, according to the node classification method provided in this application, in the training phase, stratified sampling is performed on a plurality of neighboring nodes in the graph data sample based on the training sampling parameter input by a user and predicted categories of the plurality of neighboring nodes, and data distribution of obtained sampled nodes is similar to or consistent with data distribution of the plurality of neighboring nodes, thereby avoiding a poor prediction effect of a model on a few categories caused by sample imbalance. It should be understood that, in some application scenarios, for example, in a risk control scenario, a quantity of fraud nodes is far less than a quantity of normal nodes, a category of samples with a small quantity has little impact on a loss function, and is easily ignored in an optimization process. Sample imbalance easily causes difficulty of predicting the fraud nodes by the model. This case can be avoided to a great extent by using the training manner provided in this application. In addition, a plurality of pseudo labels of the graph data sample are obtained based on the inference sampling parameter input by the user, and the model is further trained by using the pseudo labels. In addition, the generated pseudo labels are verified in each round of training, so that the pseudo labels used in each round of training are pseudo labels that can provide a positive beneficial effect for the model. In this way, in a model training process, maximum utilization of information in unlabeled neighboring node samples can be implemented, to achieve a data enhancement effect. In some scenarios in which a quantity of true labels is small and it is difficult to perform labeling, a large quantity of unlabeled neighboring node samples can also be used to complete model training.

In the inference phase, sampling is performed on a plurality of neighboring nodes in the graph data a plurality of times based on the inference sampling parameter input by the user, to obtain a plurality of sampled node sets, then a plurality of prediction results of the to-be-detected node are obtained based on the plurality of sampled node sets, and a predicted category of the to-be-detected node is obtained by voting based on the plurality of prediction results, so that impact of random sampling on the prediction results can be reduced, thereby improving stability and reliability of a final result.

In conclusion, this application provides a node classification method. In the method, category distribution of a plurality of neighboring nodes in graph data is first obtained through prediction, a training sampling parameter input by a user is obtained, and sampling is then performed on a plurality of neighboring node samples in a graph data sample to obtain a plurality of sampled nodes, so that category distribution of the plurality of sampled nodes is similar to or consistent with category distribution of the plurality of neighboring node samples obtained through prediction. In this way, the data distribution of the sampled nodes obtained through sampling is closer to distribution of potential true neighboring nodes, and model performance can be improved by using the sampled nodes obtained in this manner to participate in model training. In addition, in the node classification system, considering that future neighboring nodes in an actual inference process cannot participate in inference, generation time of the sampled nodes participating in training is earlier than that of a central node, so that the sampled nodes participating in training can better comply with true distribution in an inference phase, thereby further improving model performance. Finally, a plurality of rounds of training are performed on a model based on the sampled nodes until the model converges, the converged model is used to predict a high-confidence pseudo label of the neighboring nodes after each round of training is ended, a verification set is used to verify the pseudo label to retain a pseudo label beneficial to the model and remove a pseudo label not beneficial to the model, and a next round of training is then performed, so that the pseudo label used in each round of training is a pseudo label that can provide a positive beneficial effect for the model. In this way, in a model training process, maximum utilization of information in unlabeled neighboring node samples can be implemented, to achieve a data enhancement effect. In addition, a high-confidence pseudo label is labeled, so that category distribution of a finally obtained new training set including labeled samples and samples with the pseudo label is closer to the potential true distribution, and accuracy of the model can be further improved by further training the model by using such training set, thereby improving performance of a graph neural network.

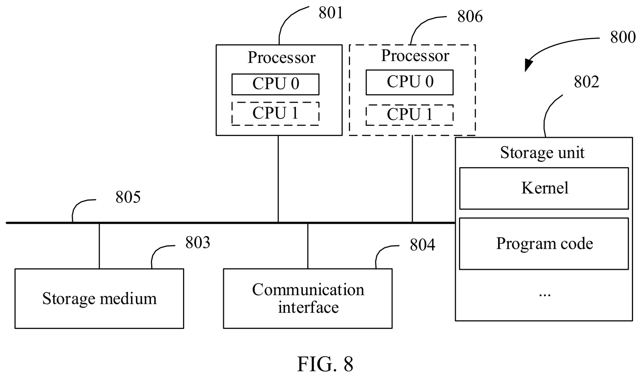

The foregoing describes in detail the node classification method provided in this application with reference to FIG. 2 to FIG. 7. The following describes a computing device provided in this application with reference to FIG. 8. FIG. 8 is a diagram of a structure of a computing device according to this application. The computing device 800 may be the node classification system 200 in the foregoing content.

Further, the computing device 800 includes a processor 801, a storage unit 802, a storage medium 803, and a communication interface 804. The processor 801, the storage unit 802, the storage medium 803, and the communication interface 804 communicate with each other through a bus 805, or communicate with each other in another manner, for example, wireless transmission.

The processor 801 may include a plurality of general-purpose processors, for example, a CPU, an NPU, or a combination of a CPU and a hardware chip. The hardware chip may be an application-specific integrated circuit (application-specific integrated circuit, ASIC), a programmable logic device (programmable logic device, PLD), or a combination thereof. The PLD is a complex programmable logic device (complex programmable logic device, CPLD), a field programmable logic gate array (field programmable gate array, FPGA), generic array logic (generic array logic, GAL), a data processing unit (data processing unit, DPU), a system on chip (system on chip, SoC), or any combination thereof. The processor 801 executes various types of digital storage instructions, for example, a software or firmware program stored in the storage unit 802, to enable the computing device 800 to provide a plurality of services in a wide range.

During specific implementation, in an embodiment, the processor 801 includes one or more CPUs, for example, a CPU 0 and a CPU 1 that are shown in FIG. 8.

During specific implementation, in an embodiment, the computing device 800 also includes a plurality of processors, for example, the processor 801 and a processor 806 that are shown in FIG. 8. Each of the processors may be a single-core processor (single-CPU), or may be a multi-core processor (multi-CPU). The processor herein means one or more devices, circuits, and/or processing cores configured to process data (for example, computer program instructions).

The storage unit 802 is configured to store program code, and the processor 801 controls execution of the program code, to perform the processing steps of the node classification method in any one of embodiments in FIG. 1 to FIG. 7. The program code includes one or more software units. The one or more software units are one or more of the training unit, the subgraph generation unit, the sampling unit, the aggregation unit, the label generation unit, the obtaining unit, the output unit, the prediction unit, and the voting unit in the embodiment in FIG. 2. The obtaining unit is configured to obtain graph data and an inference sampling parameter of a to-be-detected node. Specifically, the obtaining unit is configured to implement step S310 and optional steps thereof in embodiments in FIG. 3 and FIG. 4, and S510 and optional steps thereof in embodiments in FIG. 5 and FIG. 6. The prediction unit is configured to input the graph data into a node classification model to obtain category distribution of a plurality of neighboring nodes, perform sampling on the plurality of neighboring nodes based on the inference sampling parameter and the category distribution of the plurality of neighboring nodes, to obtain a plurality of sampled nodes, and then input features of the plurality of sampled nodes and a feature of the to-be-detected node into the node classification model, to obtain a predicted category of the to-be-detected node. Specifically, the prediction unit is configured to implement step S520 to step S560 and optional steps thereof in embodiments in FIG. 5 and FIG. 6. The training unit is configured to input the graph data into an initial model to obtain category distribution of a plurality of neighboring node samples, and is further configured to train the initial model based on features of the plurality of sampled node samples and a feature of a central node, to obtain the node classification model. Specifically, the training unit is configured to implement step S320, step S350, and optional steps thereof of embodiments in FIG. 3 and FIG. 4. The sampling unit is configured to perform sampling on the plurality of neighboring node samples based on a training sampling parameter and the category distribution of the neighboring node samples, to obtain a plurality of sampled node samples. Specifically, the sampling unit is configured to implement step S340 and optional steps thereof of embodiments in FIG. 3 and FIG. 4. The label generation unit is configured to generate a pseudo label based on the training sampling parameter. Specifically, the label generation unit is configured to implement step S360 and optional steps thereof of embodiments in FIG. 3 and FIG. 4. It should be understood that for specific descriptions of the plurality of software units, refer to the content in the embodiment in FIG. 2. Details are not described herein again.

The storage unit 802 includes a read-only memory and a random access memory, and provides instructions and data for the processor 801. The storage unit 802 further includes a non-volatile random access memory. The storage unit 802 is a volatile memory or a non-volatile memory, or includes both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM), and is used as an external cache. By way of example but not limitative description, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). Alternatively, a hard disk (hard disk), a USB flash drive (universal serial bus, USB), a flash memory (flash), an SD card (secure digital memory card, SD card), a memory stick, or the like may be used. The hard disk is a hard disk drive (hard disk drive, HDD), a solid-state drive (solid-state drive, SSD), a mechanical hard disk (mechanical hard disk, HDD), or the like. This is not specifically limited in this application.

The storage medium 803 is a carrier for storing data, for example, a hard disk (hard disk), a USB flash drive (universal serial bus, USB), a flash memory (flash), an SD card (secure digital memory card, SD card), or a memory stick. The hard disk may be a hard disk drive (hard disk drive, HDD), a solid-state drive (solid-state drive, SSD), a mechanical hard disk (mechanical hard disk, HDD), or the like. This is not specifically limited in this application.

The communication interface 804 may be a wired interface (for example, an Ethernet interface), an internal interface (for example, a high-speed serial computer extended bus (Peripheral Component Interconnect express, PCIe) interface), a wired interface (for example, an Ethernet interface) or a wireless interface (for example, a cellular network interface or a wireless local area network interface). The communication interface is configured to communicate with another server or unit.

The bus 805 is a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL) bus, a cache coherent interconnect for accelerators (cache coherent interconnect for accelerators, CCIX) bus, or the like. The bus 805 is classified into an address bus, a data bus, a control bus, and the like.

In addition to the data bus, the bus 805 further includes a power bus, a control bus, a status signal bus, and the like. However, for clear description, various types of buses in the figures are marked as the bus 805.

It should be noted that FIG. 8 is merely a possible implementation of this embodiment of this application. In actual application, the computing device 800 may further include more or fewer components. This is not limited herein. For content that is not shown or not described in this embodiment of this application, refer to the related descriptions in embodiments in FIG. 1 to FIG. 6. Details are not described herein again.

An embodiment of this application further provides a computing device cluster. The computing device cluster includes at least one computing device 800. A memory 803 in one or more computing devices 800 in the computing device cluster may store a same instruction or different instructions for performing the node classification method.

An embodiment of this application further provides a computer program product including instructions. The computer program product may be a software or program product that includes instructions and that can be run on a computing device or stored in any usable medium. When the computer program product runs on at least one computing device, the at least one computing device is caused to perform a node classification method.

An embodiment of this application further provide a computer-readable storage medium. The computer-readable storage medium may be any usable medium that can be stored by a computing device, or a data storage device like a data center including one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive), or the like. The computer-readable storage medium includes instructions. The instructions instruct a computing device to perform a node classification method.

All or some of the foregoing embodiments may be implemented by using software, hardware, firmware, or any combination thereof. When the foregoing embodiments are implemented by using software, all or some of the foregoing embodiments may be implemented in a form of a computer program product. The computer program product includes a plurality of computer instructions. When the computer program instructions are loaded and executed on a computer, the procedures or functions according to embodiments of the present invention are all or partially generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium.

The foregoing descriptions are merely specific implementations of the present invention, but are not intended to limit the protection scope of the present invention. Various equivalent repairs or replacements readily figured out by a person skilled in the art within the technical scope disclosed in the present invention shall fall within the protection scope of the present invention. Therefore, the protection scope of the present invention shall be subject to the protection scope of the claims.

## Claims

1. A graph neural network-based node classification method, wherein the method comprises:
obtaining graph data and an inference sampling parameter of a to-be-detected node, wherein the graph data comprises the to-be-detected node and a plurality of neighboring nodes connected to the to-be-detected node;
inputting the graph data into a node classification model, to obtain category distribution of the plurality of neighboring nodes;
performing sampling on the plurality of neighboring nodes based on the inference sampling parameter and the category distribution of the plurality of neighboring nodes, to obtain a plurality of sampled nodes; and
inputting features of the plurality of sampled nodes and a feature of the to-be-detected node into the node classification model, to obtain a predicted category of the to-be-detected node.

2. The method according to claim 1, wherein a similarity between category distribution of the plurality of sampled nodes and the category distribution of the plurality of neighboring nodes is greater than a first threshold.

3. The method according to claim 1 or 2, wherein the to-be-detected node comprises a labeled node and an unlabeled node, the category distribution of the plurality of neighboring nodes is obtained based on a label of the labeled node and a prediction result of the unlabeled node, and the prediction result of the unlabeled node is obtained by inputting the graph data into the node classification model.

4. The method according to any one of claims 1 to 3, wherein the inference sampling parameter comprises a quantity of sampled nodes; or
the inference sampling parameter comprises a quantity of sampling layers, the quantity of sampling layers is used to perform stratified sampling on the plurality of neighboring nodes based on the category distribution of the plurality of neighboring nodes to obtain the plurality of sampled nodes, wherein each sampling layer comprises a plurality of sampled nodes of a same category, and sampled nodes of each category correspond to one or more sampling layers.

5. The method according to claim 4, wherein the inference sampling parameter comprises a quantity of sampling times, the quantity of sampling times is used to perform sampling on the plurality of neighboring nodes a plurality of times, the plurality of collected nodes comprise a plurality of collected node sets, one collected node set corresponds to one time of sampling, the predicted category of the to-be-detected node is obtained based on a plurality of prediction results, and one prediction result is obtained by inputting one sampled node set into the node classification model.

6. The method according to any one of claims 1 to 5, wherein before obtaining the graph data and the inference sampling parameter of the to-be-detected node, the method further comprises:
obtaining a graph data sample of a central node and a training parameter, wherein the graph data sample comprises the central node and a plurality of neighboring node samples connected to the central node, the training sampling parameter comprises a quantity of sampled nodes or a quantity of sampling layers, and the graph data of the to-be-detected node and the graph data sample of the central node are different subgraphs in a same graph;
inputting the graph data sample into an initial model to obtain category distribution of the plurality of neighboring node samples;
performing sampling on the plurality of neighboring node samples based on the training sampling parameter and the category distribution of the neighboring node samples, to obtain a plurality of sampled node samples, wherein the similarity between the category distribution of the plurality of sampled nodes and the category distribution of the plurality of neighboring nodes is greater than a second threshold; and
inputting features of the plurality of sampled node samples and a feature of the central node into the initial model for training, to obtain the node classification model.

7. The method according to claim 6, wherein generation time of the plurality of sampled node samples is earlier than generation time of the central node.

8. The method according to claim 6 or 7, wherein inputting the features of the plurality of sampled node samples into the initial model for training, to obtain the node classification model comprises:
inputting the features of the plurality of sampled node samples into the initial model for training, to obtain a first model; and
generating a pseudo label of the graph data sample based on the first model, and training the first model by using the pseudo label, to obtain the node classification model.

9. The method according to claim 8, wherein the training sampling parameter comprises a pseudo label threshold, and confidence of the pseudo label is greater than the pseudo label threshold.

10. The method according to any one of claims 1 to 9, wherein the graph data comprises any one of social media network graph data, transaction network graph data, commodity network graph data, knowledge graph, and biomolecular structure graph data.

11. A graph neural network-based node classification system, wherein the system comprises:
an obtaining unit, configured to obtain graph data and an inference sampling parameter of a to-be-detected node, wherein the graph data comprises the to-be-detected node and a plurality of neighboring nodes connected to the to-be-detected node; and
a prediction unit, configured to input the graph data into a node classification model, to obtain category distribution of the plurality of neighboring nodes, wherein
the prediction unit is configured to perform sampling on the plurality of neighboring nodes based on the inference sampling parameter and the category distribution of the plurality of neighboring nodes, to obtain a plurality of sampled nodes; and
the prediction unit is configured to input features of the plurality of sampled nodes and a feature of the to-be-detected node into the node classification model, to obtain a predicted category of the to-be-detected node.

12. The system according to claim 10, wherein a similarity between category distribution of the plurality of sampled nodes and the category distribution of the plurality of neighboring nodes is greater than a first threshold.

13. The system according to claim 11 or 12, wherein the to-be-detected node comprises a labeled node and an unlabeled node, the category distribution of the plurality of neighboring nodes is obtained based on a label of the labeled node and a prediction result of the unlabeled node, and the prediction result of the unlabeled node is obtained by inputting the graph data into the node classification model.

14. The system according to any one of claims 11 to 13, wherein the inference sampling parameter comprises a quantity of sampled nodes; or
the inference sampling parameter comprises a quantity of sampling layers, the quantity of sampling layers is used to perform stratified sampling on the plurality of neighboring nodes based on the category distribution of the plurality of neighboring nodes to obtain the plurality of sampled nodes, wherein each sampling layer comprises a plurality of sampled nodes of a same category, and sampled nodes of each category correspond to one or more sampling layers.

15. The system according to claim 14, wherein the inference sampling parameter comprises a quantity of sampling times, the quantity of sampling times is used to perform sampling on the plurality of neighboring nodes a plurality of times, the plurality of collected nodes comprise a plurality of collected node sets, one collected node set corresponds to one time of sampling, the predicted category of the to-be-detected node is obtained based on a plurality of prediction results, and one prediction result is obtained by inputting one sampled node set into the node classification model.

16. The system according to any one of claims 11 to 15, wherein the system further comprises a training unit and a sampling unit, wherein the training unit is configured to obtain a graph data sample of a central node and a training parameter before the obtaining unit obtains the graph data and the inference sampling parameter of the to-be-detected node, wherein the graph data sample comprises the central node and a plurality of neighboring node samples connected to the central node, and the training sampling parameter comprises a quantity of sampled nodes or a quantity of sampling layers, and the graph data of the to-be-detected node and the graph data sample of the central node are different subgraphs in a same graph;
the training unit is configured to input the graph data sample into an initial model to obtain category distribution of the plurality of neighboring node samples;
the sampling unit is configured to perform sampling on the plurality of neighboring node samples based on the training sampling parameter and the category distribution of the neighboring node samples, to obtain a plurality of sampled node samples, wherein the similarity between the category distribution of the plurality of sampled nodes and the category distribution of the plurality of neighboring nodes is greater than a second threshold; and
the training unit is configured to input features of the plurality of sampled node samples and a feature of the central node into the initial model for training, to obtain the node classification model.

17. The system according to claim 16, wherein generation time of the plurality of sampled node samples is earlier than generation time of the central node.

18. The system according to claim 16 or 17, wherein the system comprises a label generation unit;
the training unit is configured to input the features of the plurality of sampled node samples into the initial model for training, to obtain a first model; and
the label generation unit is configured to: generate a pseudo label of the graph data sample based on the first model, and train the first model by using the pseudo label, to obtain the node classification model.

19. The system according to claim 18, wherein the training sampling parameter comprises a pseudo label threshold, and confidence of the pseudo label is greater than the pseudo label threshold.

20. The system according to any one of claims 11 to 19, wherein the graph data comprises any one of social media network graph data, transaction network graph data, commodity network graph data, knowledge graph, and biomolecular structure graph data.

21. A computing device, wherein the computing device comprises a processor and a memory, the memory is configured to store instructions, and the processor is configured to execute the instructions, to cause the computing device to implement the system according to any one of claims 1 to 10.

22. A computer-readable storage medium, wherein the computer-readable storage medium stores instructions, and when the instructions are run by a computing device or a computing device cluster, the system according to any one of claims 1 to 10 is implemented.
